# EUROPEAN PATENT APPLICATION

(11) **EP 4 494 886 A1**
(43) Date of publication of application: **22.01.2025**
(21) Application number: 23770674.2
(22) Date of filing: 10.03.2023
(51) Int. Cl.: B41M 5/00, B41J 2/01, B41M 5/52, C09D 11/322, C09D 11/54

(54) **IMAGE-FORMING METHOD AND IMAGE-FORMING DEVICE**

(30) Priority: 18.03.2022 JP 2022043313
(71) Applicant: KONICA MINOLTA, INC., Tokyo 100-7015 (JP)
(72) Inventor: OMATA Takenori, Tokyo 100-7015 (JP)
(74) Representative: Gille Hrabal Partnerschaftsgesellschaft mbB Patentanwälte
(86) International application number: PCT/JP2023/009290
(87) International publication number: WO 2023/176719

(57) **Abstract**

The problem of the present invention is to provide an image-forming method and an image-forming device that yield excellent gloss, color gamut, pinning, and substrate adhesion. This image-forming method includes a treatment liquid coating step, an ink coating step, and a drying step, and is characterized in that: in the treatment liquid coating step, a substrate is coated with a treatment liquid containing a solvent and a material dissolved in water and having ionic properties; in the ink coating step, a coating of an ink containing a pigment, and inorganic particles or organic particles, and a solvent is applied; and in at least one drying step of the drying step, the coating film is dried by irradiation with microwaves.

## Description

### Technical Field

The present invention relates to an image-forming method and an image-forming apparatus. More specifically, the present invention relates to an image-forming method and an image-forming apparatus excellent in gloss and color gamut and excellent in pinning property and base material adhesion.

### Background Art

For non-absorbent base material, a method is known in which an ink set including a processing liquid containing an aggregating agent and a color ink is used to fix ink on the non-absorbent base material (for example, a plastic film), thereby forming a high-quality image.

According to this method, when an image (printed product) is formed on the non-absorbent base material, the color ink is aggregated by using the processing liquid containing the aggregating agent. In addition, due to the effect thereof, it is possible to form the high-quality image which is excellent in gloss and color gamut and is excellent in pinning properties and base material adhesiveness.

However, the above-described ink set has a problem in that uneven reaction occurs between the processing liquid containing the aggregating agent and the color ink when they are mixed on the base material. In addition, there is a problem in that variation occurs in a dot of the ink when the ink lands on the base material, and the color gamut does not extend.

Furthermore, there has been a problem that the pinning property of the ink is insufficient depending on the type of the base material.

On the other hand, as a method of forming an image on the base material, a drying method is known in which a material is irradiated with microwaves (dielectric heating) to generate heat, thereby giving a quick-drying property to the ink and improving the pinning property.

It is known that the above-described drying method has advantages that drying efficiency is high and a plastic base material or the like is not damaged because microwaves directly act on a material having high electrical conductivity.

However, on the other hand, heat generation due to microwave irradiation tends to depend on conductivity of the ink. For example, when an image is formed with an ink set including a white ink (W) and a black ink (K), titanium oxide contained in the white ink (W) and carbon black (CB) contained in the black ink (K) excessively generate heat. As a result, a temperature difference from other portions is generated, and there is a problem in that uniform drying control cannot be performed and defects occur in physical properties of the image (printed product).

Problems may also occur for the same reasons as described above when an image is formed with an ink set including the white ink (W), a yellow ink (Y), a magenta ink (M), a cyan ink (C), and the black ink (K). That is, the white ink (W) and the black ink (K) are excessively dried as compared with the other colors, and a problem may occur in the physical properties of the image (printed product).

For example, Patent Literature 1 (Japanese Unexamined Patent Publication No. H 05-278259) discloses a technique in which a target to be dried to which a water-based ink is applied is irradiated with microwaves to give a quick-drying property.

Furthermore, Patent Literature 2 (Japanese Unexamined Patent Publication No. 2010-084289) discloses a technique of irradiating a textile printing ink with microwaves to improve cloth fixing performance.

However, there is no description that microwaves are irradiated at the time of image formation using the ink set including the processing liquid containing a fixing resin and the aggregating agent and the color ink, and there is a problem in that uniform drying control is not performed.

Patent Literature 3 (Japanese Unexamined Patent Publication No. 2019-151071) defines the conductivity of carbon black (CB) contained in the water-based ink. Thus, a technique is disclosed in which excessive heat generation during microwave irradiation is suppressed and sparks during drying are prevented.

However, since only urethane resin is adopted as the fixing resin, there is little room for resin selection. Thus, there is no description that microwaves are applied during image formation using the ink set including the processing liquid containing the aggregating agent and the color ink, and there is a problem in that uniform drying control is not performed.

### Citation list

### Patent Literature

Patent literature 1: Japanese Unexamined Patent Publication No. H 05-278259
Patent literature 2: Japanese Unexamined Patent Publication No. 2010-084289
Patent literature 3: Japanese Unexamined Patent Publication No. 2019-151071

### SUMMARY OF INVENTION

### Technical Problem

The present invention has been made in consideration of the above-described problems and situations, and a problem to be solved by the present invention is to provide an image forming method and an image forming apparatus excellent in gloss and color gamut and excellent in pinning property and base material adhesion.

### Solution to Problem

In order to solve the above-described problem, the present inventors have conducted studies on the causes and the like of the above-described problems, and as a result, have found that the above-described problem can be solved by drying a mixed coating film of a processing liquid containing a material dissolved in water and having ionic properties and a solvent, and an ink containing a pigment, inorganic particles or organic particles, and a solvent, by irradiation with microwaves, and have completed the present invention.

That is, the above-described problems according to the present invention are solved by the following means.
1. An image-forming method comprising: processing liquid applying, ink applying, and drying, wherein, in the processing liquid applying, a processing liquid containing a material dissolved in water and having an ionic property and a solvent is applied onto a base material, in the ink applying, an ink containing a pigment, an inorganic particle or an organic particle, and the solvent is applied, and in at least one drying of the drying, a coating film is dried by irradiation with microwaves.
2. The image-forming method according to aspect 1, wherein the processing liquid is applied by an inkjet method.
3. The image-forming method according to aspects 1 or 2, wherein the ink uses two or more kinds of ink having different electrical conductivities.
4. The image-forming method according to any one of aspects 1 to 3, wherein the processing liquid contains a metal salt, a cationic resin, or an organic acid.
5. The image-forming method according to any one of aspects 1 to 4, wherein an electrical conductivity of the processing liquid is equal to or higher than an electrical conductivity of the ink.
6. The image-forming method according to any one of aspects 1 to 5, wherein the processing liquid contains a water-soluble solvent having a boiling point of 180°C or higher.
7. The image-forming method according to any one of aspects 1 to 6, wherein the processing liquid or the ink contains an ionic resin.
8. The image-forming method according to any one of aspects 1 to 7, at which an electric conductivity of a mixed coating film of the processing liquid and the ink is in a range of 50 to 600 mS/m.
9. The image-forming method according to any one of aspects 1 to 8, in the drying, hot air is applied to a mixed coating film of the processing liquid and the ink.
10. The image-forming method according to any one of aspects 1 to 9, wherein the base material includes a portion that is deformed by heat.
11. An image-forming apparatus including processing liquid applying, ink applying, and drying, the image-forming apparatus including ; a unit that performs the image-forming method according to any one of aspects 1 to 10.

### Advantageous Effects of Invention

The above-described means of the present invention can provide an image forming method and an image forming apparatus excellent in gloss and color gamut and excellent in pinning property and base material adhesion.

The expression mechanism or action mechanism of the effect of the present invention is not clear, but it is presumed as follows.

The image forming method of the present invention includes a processing liquid application process, an ink application process, and a drying process.

The processing liquid used in the processing liquid application step is usually used for the purposes and viewpoints of moderately aggregating the ink, suppressing aggregation unevenness, improving the pinning properties of the ink, and the like.

In addition, since the processing liquid according to the present invention contains a material that dissolves in water and has ionic properties and a solvent, the electrical conductivity of the processing liquid is increased. Therefore, when microwave irradiation is performed later, the Joule heat of the salt ions is added in addition to the dielectric heating, the heat generating effect increases, and the aggregation rate in the drying process greatly increases.

As a result, smaller and more uniform ink dots are formed, and an image with high gloss and color gamut is formed.

That is, by combining the effect of aggregation pinning of the processing liquid and the color ink with microwave drying, it is possible to obtain an image quality improvement effect that is not merely an improvement in drying properties.

The ink used in the ink application step contains a pigment, inorganic particles or organic particles, and a solvent for its functionality, and is mixed with the processing liquid on the base material to form a mixed coating film.

The order of the processing liquid application step and the ink application step is not limited, and the order can be appropriately changed according to desired performance, effective application efficiency, and the like.

In the present specification, the concepts of "coating film" and "mixed coating film" include a liquid state having fluidity such as wet spreadability or permeability immediately after application of the processing liquid onto the base material, immediately after application of the ink onto the base material, or immediately after mixing of the processing liquid and the ink on the base material, and subsequent states (states after drying).

Furthermore, the above-described "liquid state having fluidity" refers to a state in which a liquid (including a semi-solid state in the present invention) moves so as to wet-spread or penetrate on the base material or the coating film.

In the drying step, uniform drying control is performed by irradiating the coating film with the processing liquid, the coating film with the ink, or the mixed coating film with microwaves.

The term "uniform drying control" as used herein refers to performing control in a manner such that quick-drying properties are given to a particular portion to be dried and a portion other than the portion to be dried and a portion to be dried are uniformly dried.

As described above, in the related art, the quick-drying property is given to the ink by irradiating the microwave, but uniform drying control has not been achieved.

In addition, there is no description of the effect of forming the image having gloss or a wide color gamut by applying microwaves to the processing liquid and the color ink.

Microwave irradiation tends to generate Joule heat and generate heat easily in a case where electrical conductivity is high.

In the present invention, the heat generation effect by microwave irradiation can be uniformly controlled by reducing the difference in electrical conductivity in the plane of the target to be dried by the properties, combination, and the like of the ionic material and the solvent contained in the processing liquid.

In addition, it is possible to perform more uniform drying control by simultaneously using an aggregation effect due to a reaction between the processing liquid and the ink.

It has been found that since uniform drying control can be performed as described above, the image having excellent ink pinning properties, an improved color gamut and base material adhesion, high transparency, excellent color gamut, and high image quality can be formed.

### Brief Description of Drawings

[FIG. 1] This is a schematic diagram of a recording apparatus preferable for the present invention.
[FIG. 2] This is a schematic diagram of an image forming apparatus when a processing liquid is applied with a roll coater.
[FIG. 3] This is a schematic view when ink is applied onto the processing liquid.
[FIG. 4] This is a schematic diagram when the processing liquid is applied by inkjet coating.
[FIG. 5A] This is a schematic diagram of an application pattern 1 of the processing liquid.
[FIG. 5B] This is a schematic diagram of an application pattern 2 of the processing liquid.
[FIG. 5C] This is a schematic diagram of an application pattern 3 of the processing liquid.
[FIG. 6] This illustrates an image forming apparatus when ink including metallic nanoparticles is used.
[FIG. 7] This is a schematic diagram of an application pattern 4 of the processing liquid.
[FIG. 8] This is a schematic diagram of the application pattern 5 of the processing liquid.
[FIG. 9] This is a schematic diagram for evaluating a wrinkle of a printed product.
[FIG. 10A] This is an example of a gradation pattern image of a density gradation chart.
[FIG. 10B] This is an example of color gamut evaluation according to a*b* plane.

### Description of Embodiments

The image forming method of the present invention is an image forming method including a processing liquid application step, an ink application step, and a drying step, wherein in the processing liquid application step, a processing liquid containing an ionic material dissolved in water and a solvent is applied onto a base material, in the ink application step, an ink containing a pigment, inorganic particles or organic particles, and a solvent is applied, and in at least one drying step of the drying steps, a coating film is dried by irradiation with microwaves.

This feature is a technical feature common to or corresponding to the following embodiments (aspects).

As an embodiment of the present invention, it is preferable to apply the processing liquid by an inkjet method from the viewpoint of freely controlling an amount and application range of the processing liquid.

From the viewpoint of controlling the drying property of the ink, it is preferable to use two or more kinds of inks having different electric conductivities.

The processing liquid preferably contains a metal salt, a cationic resin, or an organic acid from the viewpoint of an aggregation property and a fixing property of the ink.

It is preferable that the electric conductivity of the processing liquid is equal to or higher than the electric conductivity of the ink, from the viewpoint of improving the drying property of the mixed coating film, forming uniform dots without graininess, and improving gloss and color gamut.

It is preferable that the processing liquid contains a water-soluble solvent having a boiling point of 180 °C or higher from the viewpoint of control of drying properties.

The processing liquid or the ink preferably contains an ionic resin from the viewpoint of fixability, film formability, and the like.

It is preferable that the mixed coating film of the processing liquid and the ink has an electrical conductivity in the range of 50 to 600 mS/m from the viewpoints of prevention of excessive printing and suppression of cracking and ignition of the mixed coating film.

In the drying step, hot air is preferably applied to the mixed coating film of the processing liquid and the ink from the viewpoint of controlling the drying property of the mixed coating film.

It is preferable that the base material has a heat-deformable portion, from the viewpoint of imparting excellent design properties and 3D printing effect.

An image forming apparatus of the present invention is characterized by using means for carrying out the image forming method of the present invention.

As a result, the effect of the present invention is exhibited, and the problem can be solved.

Hereinafter, the present invention, constituent elements thereof, and forms and aspects for carrying out the present invention will be described in detail. In the present description, when two figures are used to indicate a range of value before and after "to", these figures are included in the range as a lower limit value and an upper limit value.

### 1. Image Forming Method

The image forming method of the present invention is an image forming method including a processing liquid application step, an ink application step, and a drying step, wherein in the processing liquid application step, a processing liquid containing an ionic material dissolved in water and a solvent is applied onto a base material, in the ink application step, an ink containing a pigment, inorganic particles or organic particles, and a solvent is applied, and in at least one drying step of the drying steps, a coating film is dried by irradiation with microwaves.

As described above, the concepts of "coating film" and "mixed coating film" include a liquid state having fluidity such as wet spreadability or permeability immediately after application of the processing liquid onto the base material, immediately after application of the ink onto the base material, or immediately after mixing of the processing liquid and the ink on the base material, and subsequent states (states after drying).

Furthermore, the above-described "liquid state having fluidity" refers to a state in which a liquid (including a semi-solid state in the present invention) moves so as to wet-spread or penetrate on the base material or the coating film.

### (1.1) Processing Liquid Applying Step

### (1.1.1) Processing Liquid

The processing liquid according to the present invention can be applied before the ink is applied onto the base material in order to play a role of fixing (pinning) the ink onto the recording medium. Alternatively, the processing liquid can be applied after the ink has been applied onto the base material.

For example, in a case where the processing liquid plays a role of fixing (pinning) the ink on the recording medium, the processing liquid is applied onto the base material before the ink is applied, and is mixed with the ink on the base material after the processing liquid is dried. Thus, an ink aggregated layer is formed.

Furthermore, the ink can be applied before the processing liquid according to the present invention is dried, and in such a case, the ink uniformly aggregates and thickens.

As described above, by applying the processing liquid onto the base material in advance before the ink is applied onto the base material, the ink appropriately wets and spreads, and the pigment application amount or the like in the applied ink dot is controlled to an appropriate amount. For this reason, the dot diameter of the ink becomes an appropriate size, and it is possible to prevent insufficient filling of the ink in the printed product, unintended color mixing, and the occurrence of white streaks during image formation.

### (Material Dissolved in Water and Having Ionic Property)

The processing liquid according to the present invention contains a material that is dissolved in water and has ionic property.

Examples of the material that dissolves in water and has ionic property include resin, metal salt, surfactant, organic acid, and inorganic acid that have ionic property.

Further, when microwave drying is performed in the drying step described below, the electric conductivity of the processing liquid can be changed by the combination of these materials. Therefore, the heat generating effect of the microwaves can be controlled, and a drying pinning effect by the microwaves is superimposed in addition to the aggregation pinning effect of the processing liquid and the ink, thus allowing formation of an image with less graininess and high gloss and color gamut.

Furthermore, it is suitable for uniform dryness control.

Furthermore, since the base material that does not absorb microwaves does not generate heat, the base material is not damaged.

The processing liquid preferably contains the metal salt, the cationic resin, or the organic acid from the viewpoint of the aggregation property and the fixing property of the ink.

Since the processing liquid reacts and thickens when mixed with the ink, they have an effect as the aggregating agent. Thus, for example, even when image formation is performed on the non-absorbent base material, the high-quality image can be formed.

Regarding the above, one type may be used or a combination of two or more types can be used.

### [Resin Having Ionic Property]

The processing liquid according to the present invention may contain a resin, which can enhance the fixability to the recording medium. Examples of the resin include vinyl chloride-based resin, (meth) acrylic resin, urethane-based resin, polyether-based resin, and polyester-based resin. The processing liquid preferably contains an ionic resin from the viewpoint of fixability, film formability, and the like.

When drying with microwaves is performed in the drying step described below, the resin having ionic properties is directly heated with microwaves, so that the film-forming properties are improved and the adhesion to the base material is improved.

The resin contained in the processing liquid according to the present invention may be water-soluble. Usually, a pigment is an anionic component, and therefore, the resin is preferably the cationic resin from the viewpoint of forming an ink aggregation layer by being mixed with ink. That is, it is preferable from the viewpoint of forming a mixed coating film.

### <Cationic Resin>

The cationic resin is also referred to as a positive ion resin, and is a resin in which a hydrophilic group is cationic when dissolved in water.

Examples of the cationic resin include cationic urethane-based resins, cationic olefin-based resins, and cationic amine-based resins.

As the cationic urethane-based resins, commercially available products can be used, and for example, Hydran (registered trademark) CP-7010, CP-7020, CP-7030, CP-7040, CP-7050, CP-7060, CP-761037 (product names, manufactured by Dainippon Ink and Chemicals, Inc), Superflex (registered trademark) 600, 610, 620, 630, 640, 650 (product names, manufactured by Dai-ichi Kogyo Seiyaku Co., Ltd), Urethane Emulsion WBR-2120C, WBR-2122C (product names, manufactured by Taisei Fine Chemical Co., Ltd) and the like can be used.

The cationic olefin-based resin is a resin having an olefin such as ethylene and propylene in a structural skeleton, and known cationic olefin-based resins can be appropriately selected and used.

Furthermore, the cationic olefin-based resin may be in an emulsion state in which the resin is dispersed in a solvent including water, an organic solvent, or the like.

As the cationic olefin-based resin, commercially available products can be used, and examples thereof include ARROWBASE (registered trademark) CB-1200 and CD-1200 (product names, manufactured by Unitika Ltd).

As the cationic amine-based resin, any resin having an amino group in the structure may be used, and a known resin can be appropriately selected and used.

Examples thereof include a polyamine resin having an amino group in the main skeleton of the resin, a polyamide resin having an amide group in the main skeleton of the resin, and a polyallylamine resin having an allyl group in the main skeleton of the resin.

Examples of commercially available products include UNISENCE KHE103L (product name, manufactured by Senka Corporation, hexamethylenediamine/epichlorohydrin resins, 1% aqueous solutions thereof having a pH level of about 5.0, a viscosity of 20 to 50 (mPa · s) and having a solid concentration of 50% by mass) and UNISENCE KHE104L (product name, manufactured by Senka Corporation, dimethylamine/epichlorohydrin resins, 1% aqueous solutions thereof having a pH level of about 7.0 and a viscosity of 1 to 10 (mPa · s) and having a solid concentration of 20% by mass).

Other examples include FL-14 (product name, manufactured by SNF Corporation), ARAFIX (registered trademark) 100, 251S, 255, 255 LOX (product name, manufactured by Arakawa Chemical Industries, Ltd), DK-6810, 6853, 6885; WS-4010, 4011, 4020, 4024, 4027, 4030 (product name, manufactured by Seiko PMC Corporation), PAPYOGEN (registered trademark) P-105 (product name, manufactured by Senka Corporation), Sumirez Resin 650 (3830), 675A, 6615, SLX-1 (product name, manufactured by Taoka Chemical Co., Ltd), CATIOMASTER (registered trademark) PD-1, 7, 30, A, PDT-2, PE-10, PE-30, DT-EH, EPA-SK01, TMHMDA-E (product name, manufactured by Yokkaichi Chemical Co., Ltd), and JETFIX 36 N, 38A, 5052 (product name, manufactured by Satoda Chemical Industrial, Co., Ltd).

Examples of polyallylamine resins include polyallylamine hydrochloride, polyallylamine amide sulfate, allylamine hydrochloride diallylamine hydrochloride copolymers, allylamine acetate diallylamine acetate copolymer, allylamine acetate diallylamine acetate copolymer, allylamine hydrochloride dimethylallylamine hydrochloride copolymers, allylamine dimethylallylamine copolymer, polydiallylamine hydrochloride, polymethyldiallylamine hydrochloride, polymethyldiallylamine amide sulfate, polymethyldiallylamine acetate, polydiallyldimethylammonium chloride, diallylamine acetate sulfur dioxide copolymer, diallylmethylethylammoniumethylsulfate sulfur dioxide copolymer, methyldiallylamine hydrochloride sulfur dioxide copolymer, diallyldimethylammonium chloride-sulfur dioxide copolymer, diallyldimethylammonium chloride-acrylamide copolymer and the like.

In addition, a free type polyallylamine resin which is not neutralized with an acid, other than the above-described acid salt type, may be used. When the free type form is used in a processing liquid containing water, the pH of the processing liquid can be easily adjusted from neutral to alkaline side. This is preferable because it is advantageous for durability, corrosion, and the like of members of an inkjet recording apparatus. Examples of the free type polyallylamine resins include PAA-01, PAA-03, PAA-05, PAA-08, PAA-15, PAA-15C, and PAA-25 (product names, manufactured by Nittobo Medical Inc).

The content of the cationic resin is preferably within a range of 1 to 5 % by mass with respect to the total mass of the processing liquid.

### [Metal Salt]

The processing liquid according to the present invention preferably contains an inorganic or organic polyvalent metal salt as the metal salt. When the processing liquid contains the polyvalent metal salt, an anionic component in the ink mixed with the processing liquid on the base material aggregates by salting-out.

As the polyvalent metal salt, a salt of a metal having a valence of two or more can be used.

The kind of the metal (cation) constituting the polyvalent metal salt is not particularly limited, and examples thereof include divalent metal ions such as Ca²⁺, Cu^{2 +}, Ni²⁺, Mg²⁺, Zn²⁺, Ba²⁺ and the like. Other examples include trivalent metal ions such as Al³⁺, Fe3⁺, Cr³⁺, Y³⁺ and tetravalent metal ions such as Zr⁴⁺.

The type of the salt forming the polyvalent metal salt is not particularly limited, and for example, known salts such as carbonates, sulfates, nitrates, hydrochlorides, organic acid salts, borates, and phosphates can be used.

Particularly preferable specific examples of the polyvalent metal salt include calcium chloride, magnesium chloride, calcium nitrate, and magnesium nitrate. Other examples include calcium salts or magnesium salts of carboxylic acids such as magnesium acetate, calcium acetate, magnesium lactate, and calcium pantothenate.

The content of the polyvalent metal salt is preferably in a range of 0.5% to 20% by mass and more preferably in a range of 1% to 10% by mass with respect to 100% by mass of the total mass of the processing liquid.

As a result, the anionic component in the ink can be effectively aggregated, and the balance between image quality and hot water resistance can be adjusted.

The content of the metal salt such as a polyvalent metal salt in the aqueous solution can be measured by a known method, and examples thereof include inductively coupled plasma (ICP) emission analysis.

Examples of the metal salt other than the polyvalent metal salt include monovalent metal salts such as sodium salts and potassium salts, and examples thereof include sodium sulfate and potassium sulfate.

The content of the metal salt is preferably 5% by mass or less, more preferably in the range of 0.1 to 3% by mass, and still more preferably in the range of 0.5 to 1.0% by mass, relative to the total mass of the processing liquid.

When the content is within the above range, anionic components such as a coloring material in the ink can be effectively aggregated, and thus both image quality and hot water resistance can be achieved.

In the processing liquid applied to the recording medium, the amount of the metallic salts added is preferably in the range of 0.1 to 20 g/m ²and the amount of the processing liquid added is preferably adjusted so as to be in the above range.

### [Acid]

### <Organic Acid>

The organic acid according to the present invention is capable of aggregating the pigment that may be contained in the ink.

When the organic acid is contained in the processing liquid as the aggregating agent, the anionic component in the ink can be aggregated by a pH change.

As the organic acid, a monovalent carboxylic acid is preferable from the viewpoint that aggregation force of the polyvalent metal salt is not weakened.

Examples of the organic acid include formic acid, malonic acid, acetic acid, propionic acid, isobutyric acid, and benzoic acid.

The organic acid is preferably not completely neutralized with a base.

Furthermore, the term "not completely neutralized" means that among the acidic groups of the organic acid, an acidic group which is not completely neutralized by a base and dissociates a proton (H ⁺) exists.

Furthermore, by using the organic acid, the storage stability of the processing liquid is easily maintained, and blocking is unlikely to occur after the processing liquid is applied and dried.

From the above viewpoint, preferable organic acids include formic acid, malonic acid, acetic acid, propionic acid, and benzoic acid.

In a case of containing an organic acid, the content of the organic acid is preferably in a range of 0.1 to 10% by mass and more preferably in a range of 1 to 3% by mass relative to 100% by mass of the total mass of the processing liquid.

Note that when an organic acid is used, the amount of the organic acid added is preferably an amount that adjusts the pH of the processing liquid to a neutralization equivalent or less of an anion component contained in the ink.

Furthermore, in a case where the anion component is a compound having a carboxy group, the first dissociation constant of the organic acid is preferably 3.5 or less from the standpoint that image bleeding is less likely to occur.

The content of the organic acid in the aqueous solution can be measured by a known method, such as high-performance liquid chromatography (HPLC),

### <Inorganic Acid>

Examples of the acid other than the organic acid include inorganic acids, such as sulfuric acid, hydrochloric acid, nitric acid, and phosphoric acid.

These may be used alone or in combination of two or more kinds thereof.

The content of the acid is preferably 5% by mass or less, more preferably in the range of 0.1 to 3% by mass, and still more preferably in the range of 0.5 to 1.0% by mass, relative to the total mass of the processing liquid.

When the content is within the above range, an anionic component such as a white pigment in the ink can be effectively aggregated, and thus both image quality and hot water resistance can be achieved.

The acid content can be measured by a known method such as high performance liquid chromatography (HPLC).

In the processing liquid applied to the base material (recording medium), the addition amount of the acid is preferably equal to or less than the neutralization equivalent of the anion component in the ink, and the addition amount of the processing liquid is preferably adjusted so as to be within the range described above.

### (Solvent)

### [Water-Soluble Solvent]

The processing liquid according to the present invention can contain, as a solvent, a water-soluble solvent having a boiling point in a range of 150 to 250 °C. When the solvent having a high boiling point is contained in the processing liquid as described above, the processing liquid is less likely to evaporate, and thus the drying properties can be reduced, which is preferable from the viewpoint of uniform drying control.

Examples of the water-soluble solvents include alcohols, polyhydric alcohols, amines, amides, glycol ethers, and 1,2-alkanediols having 4 or more carbon atoms. Among these, it is preferable to contain a water-soluble solvent having a boiling point of 180 °C or higher, from the viewpoint of controlling drying properties.

Therefore, for example, the processing liquid containing the water-soluble solvent having the high boiling point as described above is applied to the place where the drying properties are desired to be reduced in the image forming method of the present invention. As a result, the drying rate at a specific location can be slowed, which is suitable for uniform drying control.

Examples of the polyhydric alcohols having 2 to 8 carbon atoms include 1,2-ethanediol, 1,2-propanediol, 1,3-propanediol, 1,2-butanediol, 1,3-butanediol, 1,4-butanediol, 2,3-butanediol, 2-methyl-1,3-propanediol, 1,2-pentanediol, 1,5-pentanediol, 1,2-hexanediol, 1,6-hexanediol, and 2-methylpentane-2,4-diol.

Examples of the polyalkylene glycols include diethylene glycol and dipropylene glycol.

The processing liquid may contain one or a combination of two or more selected from these water-soluble solvents.

It is preferable that least one type of the water-soluble solvent having a boiling point within a range of 150 to 250 °C is contained in the ink. The water-soluble solvents may include alcohols other than those described above, polyhydric alcohols, amines, amides, glycol ethers, and 1,2-alkanediols having 4 or more carbon atoms.

The total content of the water-soluble solvent is preferably in a range of 5% to 40% by mass, and more preferably in a range of 10% to 40% by mass, relative to 100% by mass of the total mass of the processing liquid.

Examples of the water-soluble solvents having a boiling point in the range of 180 to 300 °C include ethylene glycol, propylene glycols and dipropylene glycols, 1,3-propanediol, and glycerin.

### [Non-Aqueous Solvent]

The processing liquid according to the present invention can also contain, as the solvent, the non-aqueous solvent other than the aqueous solvent having a boiling point within a range of 150 to 250 °C.

Examples thereof include trimethylolpropane, triethylene glycol, and tetraethylene glycol.

### (Surfactant)

The processing liquid according to the present invention preferably contains a surfactant.

The surfactant is not particularly limited, but for example, at least one selected from the group consisting of polysiloxane-based surfactants and acetylene glycol-based surfactants is preferable.

Among these, a polysiloxane-based surfactant is more preferable because the solubility in the processing liquid is increased and foreign matter is less likely to be generated in the processing liquid.

The polysiloxane-based surfactants are not particularly limited, and for example, TEGOWET KL245 (polyether-modified siloxane copolymer) manufactured by Evonik Operations GmbH can be used. In addition, BYK 347, BYK 348, BYK 349, BYK-3550, and BYK-UV3510 manufactured by Byk-Chemie GmbH, and the like can be used.

In addition, the acetylene glycol-based surfactants are not particularly limited, but, for example, one or more selected from alkyleneoxide adducts of 2, 4,7,9-tetramethyl-5-decyne-4,7-diol and 2, 4,7,9-tetramethyl-5-decyne-4,7-diol, and alkyleneoxide adducts of 2,4-dimethyl-5-decyne-4-ol and 2,4-dimethyl-5-decyne-4-ol are preferable.

These are available as commercial products such as OLFINE 104 series and OLFINE E1010 of E series manufactured by Air Products Japan, Inc. In addition, commercially available products such as OLFINE PD-002W, SURFYNOL 465, and SURFYNOL 61 manufactured by Nissin Chemical Industry CO., Ltd are available.

The content of the surfactant is preferably in a range of 0.1 to 10 % by mass with respect to 100 % by mass of a total mass of the reaction liquid.

### (Other Constituent Components Of Processing Liquid)

The processing liquid according to the present invention may appropriately contain a surfactant, water, a crosslinking agent, an antifungal agent, a fungicide, and other components within a range not impairing the effects of the present invention.

Furthermore, various known additives can also be contained, for example, UV absorbers described in Japanese Unexamined Patent Publication No. S 57-74193, S57-87988 and S62-261476, anti-fading agents, and various anionic, cationic or nonionic surfactants described in Japanese Unexamined Patent Publication No. S 57-74192, S57-87989, S60-72785, S61-146591, H 1-95091 and H3-13376,and fluorescent whitening agents, antifoaming agents, lubricants such as diethylene glycol, preservatives, thickeners, and antistatic agents described in Japanese Unexamined Patent Publication No. S 59-42993, S59-52689, S62-280069, S61-242871 and H 4-219266, and the like.

### (1.1.2) Physical Properties of Processing Liquid

### (Electrical Conductivity)

The electric conductivity of the processing liquid according to the present invention is preferably equal to or higher than the electric conductivity of the ink from the viewpoint of improving the drying property of the mixed coating film, forming uniform dots without graininess, and improving the gloss and color gamut.

When the electrical conductivity of the processing liquid is equal to or higher than the electrical conductivity of the ink, the processing liquid is more strongly affected by the heat generation effect of the microwave than the ink when drying by the microwave is performed in the drying step described below. Thus, in the image forming method of the present invention, the quick-drying property can be imparted to a portion where the drying property is desired to be increased, so that uniform drying property control can be performed.

In addition, it is possible to control the influence of the microwave in accordance with the ink application region with respect to the region where the ink is not applied, which is preferable.

Note that in the present invention, the electrical conductivity can be easily measured by the method described in JIS K 0130 (1995).

As a specific method of measuring the electrical conductivity, for example, in an environment of a measurement temperature of 20 °C, the processing liquid is put in a measurement cell (CT-58101B manufactured by DKK-TOA Corporation), and the electrical conductivity can be measured by a measuring device (CM-31P manufactured by DKK-TOA Corporation).

### (Viscosity, Surface Tension, and the Like)

Physical properties of the processing liquid according to the present invention are not particularly limited and may be appropriately selected depending on the intended purpose.

For example, the viscosity, the surface tension, the pH, and the like are preferably within the following ranges.

The viscosity of the processing liquid at 25 °C is preferably in a range of 5 to 30 mPa·s, and more preferably in a range of 5 to 25 mPa ·s, from the viewpoint that stable ejection from the nozzles of the inkjet head can be achieved.

Note that the viscosity is measured using, for example, a rotational viscosity meter "RE-80L" manufactured by Toki Sangyo Co., Ltd. The measurement can be performed under measurement conditions of 25 °C, a standard cone rotor (1 ° 34' × R24), a sample liquid amount of 1. 2 mL, a rotational speed of 50 rpm, and 3 minutes.

The surface-tension of the processing liquid is preferably within a range of 1 to 55 mN/m at 25 °C from the viewpoint that the ink is suitably leveled on the recording medium and the drying time of the ink is shortened. In addition, it is more preferably 1 to 40 mN/m or less, and still more preferably within a range of 1 to 35 mN/m.

Note that the surface tension can be measured by the Wilhelmy method using a surface tensiometer "CBVP-Z" or the like manufactured by Kyowa Interface Science Co., Ltd..

### (1.1.3) Processing Liquid Application Method

In the processing liquid application step according to the present invention, the processing liquid containing the material dissolved in water and having ionic properties and the solvent is applied onto the base material.

It is preferable to apply the ink such that the processing liquid and the ink are mixed in a liquid state on the base material, from the viewpoint of appropriate aggregation of the ink, suppression of aggregation unevenness, and improvement of the pinning property of the ink.

The method of applying the processing liquid onto the base material is not particularly limited, but preferable examples thereof include an inkjet method, a roller coating method, a curtain coating method, and a spray coating method. As an embodiment of the present invention, it is preferable to apply the processing liquid by the inkjet method from the viewpoint of freely controlling an amount and application range of the processing liquid.

Since the method of applying the processing liquid is the inkjet method, the amount and application range of the processing liquid can be freely controlled in accordance with the type of the base material and variations in the degree of drying. For this reason, it is possible to uniformly control the heat generation effect due to the irradiation of the microwaves in the base material surface, and since the inside of the base material surface is more uniformly dried, defects such as wrinkling do not occur in the image (printed product).

In this case, as will be described later, when the base material to be used is a metal base material or the like, it is preferable that the metal base material is disposed on a conveyance belt and the processing liquid layer is formed by coating while transporting the belt. In addition, it is also preferable to use a flat bed type printer in which a base material is fixed for forming the processing liquid layer.

The inkjet method is not particularly limited, and a printer including an inkjet head filled with the processing liquid can be used.

Specifically, the processing liquid can be applied by discharging the processing liquid as droplets from the nozzles of the inkjet head on the basis of a digital signal, and landing the droplets on the recording medium.

An apparatus used for the inkjet method will be described in detail in the description of the image forming apparatus.

### (1.2) Ink Application Process

### (1.2.1) Ink

The ink according to the present invention is characterized by containing the pigment, inorganic particles or organic particles, and the solvent, and may also contain the ionic resin, the surfactant, water, and other components.

Furthermore, the ink according to the present invention preferably contains a pigment dispersant for dispersing the pigment.

From the viewpoint of controlling the drying property of the ink, it is preferable to use two or more kinds of inks having different electric conductivities.

Note that in the present specification, the phrase "different electrical conductivities" refers to the difference between an ink having low electrical conductivity that is close to an insulating property, such as the yellow ink (Y), the magenta ink (M), and the cyan ink (C), for example, and the ink having high electrical conductivity, such as the black ink (K) and the white ink (W).

Specifically, a case where the difference in electrical conductivity between one ink and the other ink is 5 or more is defined as "different electrical conductivities".

As described above, the higher the electrical conductivity of the microwave is, the greater the heat generating effect is. Therefore, the application amount of the processing liquid is appropriately controlled in accordance with the application amount of the ink having low electrical conductivity and the application amount of the ink having high electrical conductivity, so that the ink having high electrical conductivity is prevented from being excessively dried. In addition, uniform drying control can be performed, and the high-quality printed product can be obtained.

Microwaves in a drying step described later have a greater heat generating effect as the electrical conductivity is higher, and the amount of the processing liquid applied according to the present invention can be appropriately controlled by a method such as inkjet according to the amount of ink applied of the ink having low electrical conductivity close to the insulating property, such as the yellow ink (Y), the magenta ink (M), and the cyan ink (C), and the amount of ink applied of the ink having high electrical conductivity, such as the black ink (K) and the white ink (W). Thus, the ink having high electrical conductivity, such as the black ink (K) and the white ink (W), is prevented from being excessively dried as compared with the ink having low electrical conductivity close to the insulating property, such as the yellow ink (Y), the magenta ink (M), and the cyan ink (C). In addition, uniform drying control can be performed, and the high-quality printed product can be obtained.

### (Pigment)

As the pigment contained in the ink according to the present invention, an anionic dispersible pigment, for example, a self-dispersible pigment having an anionic group on the surface thereof is preferably used. In addition, it is preferable to use a pigment dispersed by an anionic polymer dispersant or a pigment dispersed by coating the surface with an anionic resin.

In particular, a pigment dispersed with the anionic polymer dispersant is preferably used in terms of excellent dispersibility and appropriate reaction between the processing liquid and the pigment to cause pinning.

As the pigment, conventionally known pigments can be used without any particular limitation, and for example, inorganic pigments containing inorganic particles, such as titanium oxide, and organic pigments containing organic particles, such as insoluble pigments and lake pigments, can be preferably used.

### [Insoluble Pigment]

The insoluble pigment is not particularly limited, but for example, azo, azomethine, methine, diphenylmethane, triphenylmethane, quinacridone, anthraquinone, and perylene are preferable. Furthermore, indigo, quinophthalone, isoindolinone, isoindoline, azine, oxazine, thiazine, dioxazine, thiazole, phthalocyanine, diketopyrrolopyrrole, and the like are preferable.

### [Organic Pigment]

Specific examples of the organic pigment that can be preferably used include the following pigments.

Examples of pigments for magenta or red include, C. I. Pigment Red 2, C. I. Pigment Red 3, C. I. Pigment Red 5, C. I. Pigment Red 6, C. I. Pigment Red 7, C. I. Pigment Red 15, C. I. Pigment Red 16, C. I. Pigment Red 48:1, C. I. Pigment Red 53:1, C. I. Pigment Red 57:1, C. I. Pigment Red 122, C. I. Pigment Red 123, C. I. Pigment Red 139, C. I. Pigment Red 144, C. I. Pigment Red 149, C. I. Pigment Red 166, C. I. Pigment Red 177, C. I. Pigment Red 178, C. I. Pigment Red 202, C. I. Pigment Red 222, and C. I. Pigment Violet 19.

Examples of the pigment for orange or yellow include C. I. Pigment Orange 31, C. I. Pigment Orange 43, C. I. Pigment Yellow 12, C. I. Pigment Yellow 13, C. I. Pigment Yellow 14, C. I. Pigment Yellow 15, C. I. Pigment Yellow 15:3, C. I. Pigment Yellow 17, C. I. Pigment Yellow 74, C. I. Pigment Yellow 93, C. I. Pigment Yellow 128, C. I. Pigment Yellow 94, C. I. Pigment Yellow 138, and C. I. Pigment Yellow 155. Particularly in terms of the balance between color tone and light fastness, C. I. Pigment Yellow 155 is preferred.

Examples of pigments for green or cyan include C. I. Pigment Blue 15, C. I. Pigment Blue 15:2, and C. I. Pigment Blue 15:3. Other examples include C. I. Pigment Blue 16, C. I. Pigment Blue 60, and C. I. Pigment Green 7.

Examples of a pigment for black include C. I. Pigment Black 1, C. I. Pigment Black 6, and C. I. Pigment Black 7.

### [Inorganic Pigment]

As an inorganic pigment, inorganic pigments having various colors can be used. In particular, the inorganic pigment is preferably used as the white pigment.

The white pigment is not particularly limited as long as the white pigment is a pigment that allows a cured film formed by curing the ink containing the white pigment to appear white.

Examples of white pigments include titanium oxide, zinc oxide, zinc sulfide, calcium carbonate, calcium silicate, barium sulfate, and aluminum hydroxide. Other examples include antimony oxide, zirconium oxide, silicas such as finely divided silicic acid and synthetic silicates, talc, and clay. Among these, in light of whiteness (color developing properties), a white metal oxide is preferable and titanium oxide is more preferable.

These may be used alone or in combination of two or more kinds thereof.

Note that according to the present invention, the titanium oxide, for which it is generally difficult to ensure ink ejection stability and adhesion, can be made so that particularly bleeding is suitably suppressed and adhesion is increased.

Titanium oxide has three crystal forms of an anatase type, a rutile type, and a brookite type, and generalpurpose titanium oxides can be roughly classified into the anatase type and the rutile type.

Although not particularly limited, a rutile type having a large refractive index and high concealability is preferable.

Specific examples thereof include the TR series manufactured by Fuji Titanium Industry Co., Ltd., the JR series manufactured by Tayca Corporation, and TIPAQUE manufactured by Ishihara Sangyo Kaisya, Ltd.

### [Pigment Dispersant]

The ink according to the present invention preferably contains a pigment dispersant for dispersing the pigment.

The pigment dispersant is not particularly limited, but a polymer dispersant having an anionic group is preferable, and a dispersant having a molecular weight in a range of 5000 to 200000 can be suitably used.

Examples of the polymer dispersant include styrene, styrene derivatives, vinylnaphthalene derivatives, acrylic acid, acrylic acid derivatives, maleic acid, maleic acid derivatives, itaconic acid, itaconic acid derivatives, and fumaric acid. Other examples include block copolymers and random copolymers having a structure derived from two or more monomers selected from fumaric acid derivatives, and salts thereof, polyoxyalkylenes, and polyoxyalkylene alkyl ethers.

The polymer dispersant preferably has an acryloyl group and is preferably added after neutralization with a neutralizing base.

Here, the neutralization base is not particularly limited, but is preferably an organic base such as ammonia, monoethanolamine, diethanolamine, triethanolamine, or morpholine.

In particular, when the pigment is titanium oxide, the titanium oxide is preferably dispersed with a polymer dispersant having an acryloyl group.

The amount of the polymer dispersant to be added is preferably in the range of 10 to 100% by mass, more preferably in the range of 10 to 40% by mass, based on the pigment.

It is particularly preferable that the pigment has a form of a so-called capsule pigment in which the pigment is covered with the above-described polymer dispersant.

As a method of coating the pigment with the polymer dispersant, various known methods can be used. Preferred examples of the various known methods include a phase inversion emulsification method, an acid precipitation method, and a method of dispersing a pigment with a polymerizable surfactant, supplying the monomer thereto, and coating the pigment with the monomer while polymerizing the monomer.

As a particularly preferable method, the following method can be mentioned. Water-insoluble resin is dissolved in the organic solvent such as methyl ethyl ketone, and the acidic groups in the resin are partially or completely neutralized with the base. Thereafter, the pigment and ion-exchanged water are added thereto, followed by dispersion, removal of the organic solvent, and if necessary, and addition of water.

The average particle diameter of the pigments in a dispersed state in the ink is preferably 50 nm or more and less than 200 nm.

Thus, the dispersion stability of the pigment can be improved, and the storage stability of the ink can be improved.

The particle size of the pigment can be measured with a commercially available particle size measuring device using a dynamic light scattering method, an electrophoresis method, or the like, and the measurement by the dynamic light scattering method is simple and can accurately measure a region of the particle size .

The pigment can be used after being dispersed by a dispersing machine together with a dispersant and other additives necessary for various desired purposes.

As the dispersing machine, a conventionally known ball mill, sand mill, line mill, high-pressure homogenizer or the like can be used.

In particular, it is preferable to disperse the pigment by the sand mill because the particle size distribution becomes sharp.

In addition, the material of the beads used for the sand mill dispersion is not particularly limited, but is preferably zirconia or zircon from the viewpoint of preventing generation of bead fragments or contamination of ion components.

Furthermore, the bead size is preferably within a range of 0.3 to 3 mm.

The content of the pigment in the ink is not particularly limited, but the content of titanium oxide is preferably in a range of 7 to 18 % by mass, and the content of the organic pigment is preferably in a range of 0.5 to 7 % by mass.

### (Inorganic Particles or Organic Particles and Solvent)

The inorganic particles or organic particles contained in the ink according to the present invention are used as, for example, the inorganic pigment or the organic pigment by being contained in the pigment.

In addition, as the solvent, the same solvent as that of the above-described processing liquid can be used.

### [Inorganic Particles]

Examples of the inorganic particles which can be used in the present invention include white inorganic pigments such as light calcium carbonate, heavy calcium carbonate, magnesium carbonate, kaolin, clay, talc, calcium sulfate, barium sulfate, titanium dioxide, zinc oxide, zinc hydroxide, zinc sulfide, zinc carbonate, hydrotalcite, aluminum silicate, diatomaceous earth, calcium silicate, magnesium silicate, synthetic amorphous silica, colloidal silica, alumina, colloidal alumina, pseudo-boehmite, aluminum hydroxide, lithopone, zeolite and magnesium hydroxide.

In general, titanium oxide is an example of inorganic particles contained in ink, but titanium oxide is difficult to ensure ink ejection stability and adhesion and has high electrical conductivity. Therefore, when the titanium oxide is contained in the ink, the ink is greatly influenced by the heat generation effect by the microwave in the drying process described later.

In the present invention, by appropriately controlling the application amount of the processing liquid described above, it is possible to appropriately control the heat generation effect due to microwaves, and therefore, it is possible to compensate for the defects of titanium oxide as described above.

### [Organic Particles]

The organic particles according to the present invention are water-insoluble organic particles which are dissolved or swollen by a water-soluble organic solvent having a boiling point of 120 °C or more, and the material thereof is selected from conventionally known materials such as polyvinyl chloride, polyvinylidene chloride, polyacrylate, polymethacrylate, elastomer, ethylene-vinyl acetate copolymer, styrene-(meth) acrylic copolymer, polyester, polyvinyl ether, polyvinyl acetal, polyamide, polyurethane, polyolefin, SBR, NBR, polytetrafluoroethylene, chloroprene, protein, polysaccharide, rosin ester and shellac resin.

Particularly preferred materials for the organic particles are polyvinyl acetal-based resins, polyurethanebased resins, rosin ester-based resins;(meth) acrylate-based resins, SBR, and the like. In addition, a resin formed of two or more kinds of monomers by modification or copolymerization is also preferably used, and a resin to which a specific modifying group is added or a resin from which a leaving group is removed may be used. Furthermore, two or more kinds of materials may be mixed to form the organic particles, and furthermore, two or more kinds of organic particles may be mixed and used.

The term "dissolve" as used in the present invention means that the organic particles and the water-soluble organic solvent in the ink form a single phase in an equilibrium state, and the term "swell" means that the organic particles absorb the water-soluble organic solvent to increase their volume.

The organic particles according to the present invention must be insoluble in water so as not to dissolve in inkjet recording.

However, water is allowed to be absorbed to the extent that the ink absorption rate is not hindered.

Water may be absorbed up to 20% by mass, relative to the mass of the organic particles.

In addition, a crosslinking agent may be used in the organic particles according to the present invention within a range that does not hinder dissolution or swelling in the water-soluble organic solvent.

In the present invention, as the crosslinking agent, a conventionally known crosslinking agent can be appropriately selected and used regardless of whether it is an organic substance or an inorganic substance.

In addition, since it is preferable that the organic particles themselves are hydrophilic but not water-soluble, it is preferable that the content is prepared to be in a range of 10% by mass to less than 50% by mass.

Inkjet recording sheets are usually used at room temperature, but the storage condition before use is not necessarily at room temperature. In particular, since an inkjet recording sheet is brought into an extremely hightemperature state in a sealed vehicle in summer, it is desired that the inkjet recording sheet can be used without hindrance even after being subjected to such an environment. Therefore, glass transition temperature (Tg) of the organic particles according to the aspect described in [1-4] of the present invention needs to be 70 °C or higher, but is preferably 80 °C or higher, and more preferably in the range of 90 to 120 °C.

When the glass transition temperature (Tg) of the organic particles is less than 70 °C, fusion of the organic particles due to heating is likely to occur, and as a result, the voids on the surface of the recording sheet are reduced or decreased, and the ink absorption rate is likely to decrease.

### (Resin Having Ionic Properties)

The ink according to the present invention may contain the resin, which can enhance the fixability of the ink to the recording medium. Examples thereof include vinyl chloride-based resins, (meth) acrylic resins, urethane-based resins, polyether-based resins, and polyester-based resins. It is preferable that the ink contains a resin having ionic property from the viewpoints of fixing ability, film forming ability, and the like.

When drying with microwaves is performed in the drying step described below, the resin having ionic properties is directly heated with microwaves, so that the film-forming properties are improved and the adhesion to the base material is improved.

The ionic resin contained in the ink according to the present invention is preferably water-insoluble resin fine particles, and the glass transition temperature (Tg [°C]) of the resin fine particles is preferably in the range of 40 to 90 °C.

The glass transition temperature can be determined using a differential scanning calorimeter (DSC). At this time, the glass transition temperature (Tg [°C]) can be specified by reading the glass transition temperature from an endothermic peak when the temperature is increased in a temperature range of-30 to 200 °C at a temperature increase rate of 10 °C/min.

The water-insoluble resin preferably used in the present invention is a water-insoluble resin that can accept an ink and exhibits solubility or affinity for the ink.

The "water-insoluble resin fine particle" used in the present invention is originally water-insoluble, but has a form in which a resin is dispersed in an aqueous medium as a micro fine particle. Furthermore, it is a water-insoluble resin which is dispersed in water by forced emulsification using an emulsifier or the like. Alternatively, it is a self-emulsifiable water-insoluble resin which forms a stable aqueous dispersion by itself without using an emulsifier or a dispersion stabilizer by introducing a hydrophilic functional group into the molecule.

These resins are usually used in a state of being emulsified and dispersed in water or a water/alcohol mixed solvent.

In the present invention, the term "water-insoluble" means that when the resin is dried at 105 °C for 2 hours and then dissolved in 100 g of water at 25 °C, the amount of dissolution is 10 g or less, preferably 5 g or less, and more preferably 1 g or less.

However, when the resin has a salt-forming group, the amount of dissolution is the amount of dissolution when 100% of the salt-forming group of the resin is neutralized with acetic acid or sodium hydroxide, depending on the type of the salt-forming group.

The resin having the glass transition temperature in the range of 40 to 90 °C is preferably any one of an acrylic resin, an urethane resin, a polyester resin, or a composite resin of the urethane resin and the acrylic resin. In particular, the acrylic resin, the urethane resin, the polyester resin, or the composite resin of the urethane resin and the acrylic resin is preferable, and the average particle size of these resin fine particles is preferably 200 nm or less.

In particular, the mean particle size is preferably in a range of 100 to 150 nm.

The polyester resin, the urethane resin, the acrylic resin, or a composite resin fine particle of the urethane resin and the acrylic resin is preferably anionic.

Among these, it is preferable that the resin fine particles contained in the ink contain an acid structure, and even when the addition amount of the surfactant is small, the resin fine particles can be dispersed in water, and the water resistance of the mixed coating film is improved.

This is called a self-emulsifying type, which means that a resin can be stably dispersed in water only with molecular ionic property without using the surfactant.

Examples of the acid structure include acid groups such as a carboxy group (-COOH) and a sulfonic acid group (-SO ₃ H).

The acid structure may be present in a side chain of the resin or may be present at a terminal thereof.

In particular, the ink according to the present invention preferably contains a water-dispersible polyester resin having a sulfonic acid group.

Thus, high adhesion to the base material is achieved.

Some or all of the acid structures are preferably neutralized.

By neutralizing the acid structure, the water dispersibility of the resin can be improved.

As an example of the neutralizer for neutralizing the acid structure, organic amines are preferable. As the organic amines, for example, organic amines such as trimethylamine, triethylamine, tripropylamine, tributylamine, N-methyldiethanolamine, and triethanolamine are preferably used.

Furthermore, the ink according to the present invention preferably contains resin fine particles having aggregation property of 0.2 or less with a 0.15% by mass calcium acetate aqueous solution in a range of 3 to 15 % by mass.

Use of such resin fine particles having low aggregation properties can provide high ejection stability while ensuring high wettability to the base material, thereby providing higher image quality and excellent adhesion to the base material.

In the present invention, the value of the "aggregation property" is a value calculated by the following formula after the remaining amount is measured by the following procedure.
(i) 5 g of a fine resin particle aqueous solution containing fine resin particles (solids content: 10% by mass) and 5 g of calcium acetate-monohydrate aqueous solution of 0.3% by mass are mixed.
(ii) The mixed mixture is centrifuged.
(iii) 2g of a supernatant liquid separated by centrifugation is collected.
(iv) 2 g of the collected supernatant liquid is dried at 150 °C for 30 minutes, and then the weight of the solid (remaining amount [g]) is measured.
(v) The value of the aggregation property is calculated by the following formula.
Aggregation properties = 1 -(weight of solids [g]/(weight of collected supernatant liquid [g] × 5 [%])

Specific examples of the resin fine particles having the aggregation property of 0.2 or less include, but are not limited to, Vylonal MD2000 available from Toyobo Co., Ltd., Mowinyl 6969D available from Japan Coating Resins Co., Ltd, and Evafanol HA-560 available from Nicca Chemical Co., Ltd.

Hereinafter, each resin will be described.

### [Polyester Resin]

The polyester resin having a polyester skeleton used as the water-insoluble resin particles can be obtained by using a polyhydric alcohol component and a polycarboxylic acid component such as a polycarboxylic acid, a polycarboxylic acid anhydride, or a polycarboxylic acid ester.

Specific examples of the polyhydric alcohol component include dihydric alcohols (diols) such as alkylene glycols having 2 to 36 carbon atoms (e.g., ethylene glycol, 1,2-propylene glycols, 1,3-propylene glycols, 1,4-butylene glycol, and 1,6-hexanediol), alkylene ether glycols having 4 to 36 carbon atoms (e.g., diethylene glycol, triethylene glycol, dipropylene glycol, polyethylene glycol, polypropylene glycol, and polybutylene glycol), cycloaliphatic diols having 6 to 36 carbon atoms (e.g., 1,4-cyclohexanedimethanol and hydrogenated bisphenol -A), adducts of the cycloaliphatic diols with alkylene oxides having 2 to 4 carbon atoms (e.g., ethylene oxides (hereinafter abbreviated as EO), propylene oxides (hereinafter abbreviated as PO), and butylene oxides (hereinafter abbreviated as BO)) (addition mole number: 1 to 30), and adducts of bisphenols (e.g., bisphenol -A, bisphenol -F, and bisphenol -S) with alkylene oxides having 2 to 4 carbon atoms (e.g., EO, PO, and BO) (addition mole number: 2 to 30).

These may be used alone or in combination of two or more kinds thereof.

Examples of the polyvalent carboxylic acid component include divalent carboxylic acids (dicarboxylic acids), specifically alkanedicarboxylic acids having 4 to 36 carbon atoms (e.g., succinic acid, adipic acid, and sebacic acid), alkenylsuccinic acids (e.g., dodecenylsuccinic acid), alicyclic dicarboxylic acids having 4 to 36 carbon atoms (e.g., dimer acid (dimerized linoleic acid)), alkenedicarboxylic acids having 4 to 36 carbon atoms (e.g., maleic acid, fumaric acid, citraconic acid, and mesaconic acid), and aromatic dicarboxylic acids having 8 to 36 carbon atoms (e.g., phthalic acid, isophthalic acid, terephthalic acid, or derivatives thereof, and naphthalenedicarboxylic acid).

These may be used alone or in combination of two or more kinds thereof.

As the polyester resin, the polyester resin having the anionic group in the molecule is preferable, and the polyester resin containing the sulfonic acid group is particularly preferable.

As a known synthesis method of obtaining the polyester containing the sulfonic acid group, for example, a method such as a polycondensation reaction of the dicarboxylic acid having the sulfonic acid group and the diol can be mentioned. Alternatively, it can be obtained by a method such as a polycondensation reaction of the dicarboxylic acid and the diol having the sulfonate.

Examples of the dicarboxylic acid component having the sulfonic acid group include 2-sulfoterephthalic acid and 5-sulfoisophthalic acid. Other examples include 4-sulfonaphthaleneisophthalate-2,7-dicarboxylic acid and 5-(4-sulfophenoxy) isophthalic acid, or alkali metals salts thereof.

Examples of the diol having a sulfonic acid group include 2-sulfo-1,4-butanediol, 2,5-dimethyl-3-sulfo-2,5-hexanediol, and alkali metals salts thereof.

The number average molecular weight of the polyester resin is preferably in the range of 1,000 to 50000, and more preferably in the range of 2000 to 20000.

The polyester resins may be commercially available products, and commercially available products of the water-dispersible polyester resins having the sulfonic acid group include, for example, Vylonal MD-1100, MD-1200, MD-1245, MD-1480, MD-1500, and MD-2000, manufactured by Toyobo Co., Ltd.; Plascoat Z-221, Z-446, Z-561, Z-880, and Z-3310, manufactured by Goo Chemical Co., Ltd.; and Pesresin A-520, A-613D, A-615GE, A-640, A-645GH, A-647GEX, A-110F, and A-160P, manufactured by Takamatsu Oil & Fat Co., Ltd.

Among the above-described polyesters, the resin having the glass transition temperature in a range of 40 to 90 °C is particularly preferable. Examples of the polyester include Vylonal MD-1100, MD-1200, MD-1245, MD-1500, and MD-2000 all available from Toyobo Co., Ltd. Furthermore, examples of the polyester include Plascoat Z-221, Z-446, and Z-561 manufactured by Goo Chemical Co., Ltd. Other examples include PESRESIN A-520, A-613D, A-615GE, A-640, A-645GH, and A-647GEX manufactured by Takamatsu Oil & Fat Co.,.Ltd.

These may be used alone or in combination of two or more kinds thereof.

### [Urethane Resin]

As the urethane resin used as the water-insoluble resin particles according to the present invention, those having a hydrophilic group can be used.

The urethane resin is preferably a water dispersion in which a self-emulsifying urethane having a water-soluble functional group, that is, a hydrophilic group, in the molecule is dispersed. Alternatively, it is preferably the aqueous dispersion of the forcibly emulsified urethane which is emulsified under a strong mechanical shearing force by using the surfactant in combination.

The urethane resin in the aqueous dispersion can be obtained by a reaction of a polyol with an organic polyisocyanate and a hydrophilic group-containing compound.

Examples of polyols that may be used in the preparation of the aqueous dispersion of the urethane resin include polyester polyols, polyether polyols, polycarbonate polyols, and polyolefin-based polyols.

Examples of the polyester polyols include low molecular weight polyols such as ethylene glycol, diethylene glycol, triethylene glycol, 1,2-and 1,3-propylene glycols, neopentyl glycol, 1,3-and 1,4-butanediols, 3-methylpentanediol, hexamethylene glycol, 1,8-octanediol, 2-methyl-1,3-propanediol, bisphenol -A, hydrogenated bisphenol -A, trimethylolpropane, and cyclohexanedimethanol; and condensates with polyvalent carboxylic acids such as succinic, glutaric, adipic, sebacic, phthalic, isophthalic, terephthalic, trimellitic, tetrahydrofuran, endomethine tetrahydrofuran, and hexahydrophthalic acids.

Examples of the polyether polyol include polyethylene glycol and polypropylene glycol. Also included are polyethylene polytetramethylene glycol, polypropylene polytetramethylene glycol, polytetramethylene glycol, and the like.

An example of the polycarbonate polyol can be obtained by reacting a carbonic acid derivative such as diphenyl carbonate, dimethyl carbonate, or phosgene with a diol.

Examples of the diols include ethylene glycol, diethylene glycol, triethylene glycol, 1,2-and 1,3-propylene glycols, neopentyl glycol, 1,3-and 1,4-butanediols, 3-methylpentanediol, hexamethylene glycol, 1,8-octanediol, 2-methyl-1,3-propanediol, bisphenol -A, hydrogenated bisphenol -A, trimethylolpropane, and cyclohexanedimethanol.

In addition, examples of the organic polyisocyanate which can be used in the preparation of the aqueous dispersion of the urethane resin include aromatic isocyanates such as tolylene diisocyanate (TDI), diphenylmethane diisocyanate (MDI), polymeric MDI, xylylene diisocyanate (XDI), and tetramethylxylylene diisocyanate (TMXDI); aliphatic isocyanates such as hexamethylene diisocyanate (HMDI); and alicyclic isocyanates such as isophorone diisocyanate (IPDI) and 4,4'-dicyclohexylmethane diisocyanate (hydrogenated MDI, H12MDI).

These may be used alone or in combination of two or more kinds thereof.

Examples of the hydrophilic group-containing compounds that can be used for the preparation of the aqueous dispersion of urethane resins include carboxylic acid-containing compounds such as 2,2-dimethylolpropionic acid, 2,2-dimethylolbutanoic acid, 2,2-dimethylolbutyric acid, 2,2-dimethylolvaleric acid and glycine, and derivatives thereof such as sodium salts, potassium salts and amine salts; sulfonic acid-containing compounds such as taurin (i.e., aminoethylsulfonic acid) and ethoxypolyethylene glycol sulfonic acid and derivatives thereof such as sodium salts, potassium salts and amine salts.

The urethane resin can be obtained by a known method.

For example, the urethane prepolymer can be obtained by mixing the polyol, the organic polyisocyanate, and the hydrophilic group-containing compound, and reacting the mixture at a temperature in the range of 30 to 130 °C for 30 minutes to 50 hours.

The urethane prepolymer becomes the urethane resin having the hydrophilic group by being elongated and polymerized by a chain extender.

The chain extender is preferably water and/or an amine compound.

By using water or an amine compound as the chain extender, it is possible to react with a free isocyanate in a short time and efficiently extend the isocyanate-terminated prepolymer.

Examples of the amine compound as the chain extender include aliphatic polyamines such as ethylenediamine and triethylenediamine. Also included are aromatic polyamines such as meta-xylene diamine and toluylene diamine. Polyhydrazino compounds such as hydrazine and adipic acid dihydrazide are also included.

The amine compound may contain, together with the polyamine, a monovalent amine such as dibutylamine or methyl ethyl ketoxime as a reaction terminator to the extent that the polymerization is not significantly inhibited.

Note that in the synthesis of the urethane prepolymer, the solvent that is inert to isocyanate and can dissolve the urethane prepolymer may be used.

Examples of these solvents include dioxane, methyl ethyl ketone, dimethylformamide, tetrahydrofuran, N-methyl-2-pyrrolidone, toluene, and propylene glycol monomethyl ether acetate.

It is preferable that these hydrophilic organic solvents used in the reaction stage are finally removed.

In addition, in the synthesis of the urethane prepolymer, a catalyst such as an amine catalyst, a tin-based catalyst, and a titanium-based catalyst may be added in order to accelerate the reaction. Examples of the amine catalyst include triethylamine, N-ethylmorpholine, triethyldiamine and the like. Examples of the tin-based catalyst include dibutyltin dilaurate, dioctyltin dilaurate, and tin octylate. Examples of the titanium-based catalyst include tetrabutyl titanate.

It is preferable to increase the number average molecular weight of the urethane resin as much as possible by introducing a branched structure or an internal crosslinked structure, and the number average molecular weight is preferably in a range of 50000 to 10000000.

By setting the molecular weight within the above range, the urethane resin becomes less soluble in the solvent, and therefore, the coating film excellent in weather resistance and water resistance is obtained.

Note that the number-average molecular weight (Mn) is a value measured by gel permeation chromatography (GPC), and can be determined from a calibration curve prepared with polystyrene standard samples using, for example, "RID-6A" manufactured by Shimadzu Corporation (column: "TSK-GEL" manufactured by Tosoh Corp., solvents: tetrahydrofuran (THF), column temperature: 40 °C).

A commercially available product may be used as the urethane resin.

Examples of commercially available products of the urethane resins having the glass-transition temperature in the range of 40 to 90 °C include Neorez R-967, R-600, and R-9671, which are manufactured by Kusumoto Chemicals, Ltd. In addition, EVAFANOL HA-560 manufactured by Nicca Chemical Co., Ltd., SF870 manufactured by Dai-ichi Kogyo Seiyaku Co., Ltd, and the like are included.

### [Acrylic Resin]

The acrylic resin used as the water-insoluble resin particles can be obtained using a copolymer with an acrylic acid ester component, a methacrylic acid ester component, a styrene component, or the like.

Examples of the acrylate ester components and the methacrylate ester components include methyl (meth) acrylate, ethyl (meth) acrylate, propyl (meth) acrylate, butyl (meth) acrylate, 2-hydroxyethyl (meth) acrylate, 2-hydroxypropyl (meth) acrylate, 4-hydroxybutyl (meth) acrylate, cyclohexyl (meth) acrylate, tetrahydrofurfuryl (meth) acrylate, isobornyl (meth) acrylate, benzyl (meth) acrylate, 2-hydroxybutyl (meth) acrylate, benzyl (meth) acrylate, glycidyl (meth) acrylate, (meth) acrylate, (di) ethylene glycol di (meth) acrylate, 1,4-butanediol di (meth) acrylate, 1,6-hexanediol di (meth) acrylate, trimethylolpropane tri (meth) acrylate, glycerol di (meth) acrylate, 2-ethylhexyl (meth) acrylate, lauryl (meth) acrylate, stearyl (meth) acrylate, and acrylamides.

Examples of the styrene component include styrene, 4-methylstyrene, 4-hydroxystyrene, 4-acetoxystyrene, 4-acetylstyrene, and styrenesulfonic acid.

These components may be used alone or in combination of two or more kinds thereof.

The number average molecular weight (Mn) of the acrylic resin is preferably within a range of 1000 to 50000, more preferably within a range of 2000 to 20000.

When the number average molecular weight (Mn) of the acrylic resin is 1000 or more, the aggregation force of the coating film becomes strong, and the adhesion is improved. This is because when the number average molecular weight (Mn) is 50000 or less, the solubility in the organic solvent is good, and the micronization of the particle diameter of the emulsified dispersion is promoted.

Note that the number-average molecular weight (Mn) is a value measured by gel permeation chromatography (GPC), and can be determined from the calibration curve prepared with the polystyrene standard samples using, for example, "RID-6A" manufactured by Shimadzu Corporation (column: "TSK-GEL" manufactured by Tosoh Corp., solvents: tetrahydrofuran (THF), column temperature: 40 °C).

A commercially available product may be used as the acrylic resin.

Examples of commercially available products of the acrylic resin having the glass transition temperature in the range of 40 to 90 °C include Mowinyl 6899D, Mowinyl 6969D, and Mowinyl 6800 manufactured by Japan Coating Resin Co., Ltd. Furthermore, acrylic emulsions such as TOCRYL W-7146, W-7147, W-7148, W-7149, and W-7150 and the like manufactured by Toyochem Co., Ltd., are included.

### [Composite Resin Fine Particles]

The composite resin fine particles that can be contained in the ink are preferably composite resin fine particles formed by emulsifying the acrylic resin in the urethane resin.

That is, the composite resin fine particle is preferably a composite resin fine particle having an inner layer composed of the acrylic resin and a surface layer composed of the urethane resin.

Here, the urethane resin exists at the interface between the acrylic resin as the water-insoluble resin particles and water as a continuous phase, and functions as a water-insoluble resin particle layer different from the resin that protects the water-insoluble resin particles.

When the composite resin fine particles are formed by emulsifying the acrylic resin with the urethane resin as described above, the physical properties of the image (coating film) can be improved as compared with the case where the acrylic resin and the urethane resin are separately emulsified and mixed. At the same time, the storage stability of the composite resin fine particles can also be improved.

In the composite resin fine particles obtained by emulsifying the acrylic resin in the urethane resin, the value (U/A) of a mass ratio between the urethane resin (U) and the acrylic resin (A) is preferably 40/60 to 95/5.

When the proportion of the urethane resin (U) is within the above range, the compatibility with the dispersant is improved, and the solvent resistance is also improved.

In addition, when the presence ratio of the acrylic resin (A) is within the above range, adhesion to the acrylic film is excellent.

In the above abundance ratio, the value (U/A) of the mass ratio between the urethane resin (U) and the acrylic resin (A) is preferably within the range of 40/60 to 80/20.

The total resin concentration of the acrylic resin and the urethane resin in the composite resin fine particle is not particularly limited, but is preferably 5.0 % by mass or more, more preferably in the range of 10.0 to 70.0 % by mass.

When the resin concentration is within the above range, the fixing ability of the ink to the recording medium becomes excellent.

In the emulsification of the acrylic resin with the urethane resin, the surfactant acting as the emulsifier can be used together with the urethane resin.

Here, by adding the emulsifier, the storage stability of the composite resin fine particles can be improved.

As the emulsifier, an anionic surfactant and a nonionic surfactant can be used.

The average particle diameter of the composite resin fine particles is not particularly limited, but is preferably in a range of 10 to 500 nm, more preferably in a range of 10 to 300 nm, and even more preferably in a range of 10 to 200 nm.

The average particle size can be measured by a commercially available particle size measuring instrument using a dynamic light scattering method, an electrophoresis method, or the like, but the measurement by the dynamic light scattering method is simple and can accurately measure the region of the particle size .

The use of composite resin fine particles in which the acrylic resin is emulsified in the urethane resin can improve the fixability of the image (coating film) to an absorbent base material or a non-absorbent base material.

### (Other Components)

The ink according to the present invention may contain various known additives depending on the other purposes such as ejection stability, compatibility with a print head or ink cartridge, storage stability, and image storage stability.

The ink according to the present invention may appropriately contain a pH adjuster, the surfactant, the crosslinking agent, the antifungal agent, the fungicide, and other components.

### [Surfactant]

Examples of the additive include the surfactant.

When the surfactant is added, the ejection stability of the ink can be improved, and the spread (dot diameter) of the droplet of the ink landed on the recording medium can be controlled.

The surfactant is not particularly limited, but in a case where an anionic compound is included in the constituent components of the ink, the ionic property of the surfactant may be any of anionic, nonionic (also referred to as "non-ionic"), or amphoteric. The amphoteric surfactant is preferably a betaine type.

In the present invention, when an alkaline component is contained in the anionic surfactant, the resin fine particles contained as the fixing resin are easily aggregated and the fixing property is lowered, and therefore, the surfactant is preferably nonionic.

The surfactant is preferably a fluorine-based or silicone-based surfactant having a high ability to decrease the static surface tension. In addition, the anionic surfactant such as dioctyl sulfosuccinate, which has a high ability to reduce dynamic surface tension, is preferable. In addition, relatively low molecular weight polyoxyethylene alkyl ethers, polyoxyethylene alkylphenyl ethers, acetylene glycols, and Pluronic (registered trademark)-type surfactants are preferable. In addition, nonionic surfactants such as sorbitan derivatives are preferable.

Note that a surfactant having a high ability to decrease the static surface tension and a surfactant having a high ability to decrease the dynamic surface tension may be used in combination.

In the present invention, as the surfactant, for example, TEGOWET KL245 (polyether-modified siloxane copolymer) manufactured by Evonik Operations GmbH is preferably used.

### (1.2.2) Physical Properties of Ink

### (Electrical Conductivity)

It is preferable that the electrical conductivity of the processing liquid is equal to or higher than the electrical conductivity of the ink from the viewpoint of improving the drying property of the processing liquid, forming uniform dots without graininess, gloss, and color gamut.

When the electrical conductivity of the processing liquid is equal to or higher than the electrical conductivity of the ink, the processing liquid is more strongly affected by the heat generation effect of the microwave than the ink when drying by the microwave is performed in the drying step described below. Accordingly, since the processing liquid is dried earlier than the ink, in the image forming method of the present invention, it is possible to impart the quick-drying property to a portion where the drying property is desired to be increased, and thus it is possible to uniformly control the drying property. In addition, it is possible to form uniform dots without graininess, and to form the image having excellent gloss and color gamut.

In addition, it is possible to control the influence of the microwave in accordance with the ink application region with respect to the region where the ink is not applied, which is preferable.

Details of the definition and the like of the electrical conductivity, a measurement cell, and a measuring device are the same as those of the electrical conductivity of the processing liquid described above.

### (Viscosity, Surface Tension, and the Like)

The physical properties of the ink of the present invention are not particularly limited and may be appropriately selected depending on the intended purpose. For example, the viscosity, the surface tension, the pH, and the like are preferably within the following ranges.

The ink preferably has a viscosity at 25 °C in the range of 5 to 30 mPa · s from the viewpoints of improving print density and character quality and obtaining excellent ejection reliability from nozzles of the inkjet head. Furthermore, it is more preferably within a range of 5 to 25 mPa · s.

The viscosity can be measured, for example, by using the rotational viscosity meter "RE-80L" manufactured by Toki Sangyo Co., Ltd. under the measurement conditions of 25 °C, a standard cone rotor (1 ° 34' × R24), a sample liquid amount of 1. 2 mL, a rotational speed of 50 rpm, and 3 minutes.

The surface tension of the ink is preferably in the range of 1 to 55 mN/m at 25 °C from the viewpoint that the ink is appropriately leveled on the recording medium and the drying time of the ink is shortened. In addition, it is more preferably 1 to 40 mN/m or less, and still more preferably within a range of 1 to 35 mN/m.

Note that the surface tension can be measured by the Wilhelmy method using the surface tensiometer "CBVP-Z" or the like manufactured by Kyowa Interface Science Co., Ltd..

The pH value of the ink is preferably in a range of 3 to 9, and more preferably in a range of 6 to 9, from the viewpoint of exhibiting the effect of the present invention.

### (1.2.3) Ink Application Method

In the ink applying step according to the present invention, the processing liquid described above is applied onto the base material, and the ink is applied before the processing liquid dries, so that the ink uniformly aggregates and thickens.

The method for applying the ink onto the processing liquid is not particularly limited as in the case of the processing liquid described above, but the ink is preferably applied by an inkjet method from the viewpoint of controlling the uniformity and concentration of the ink.

It is preferable that the ink be applied such that the processing liquid and the ink are mixed in a liquid state on the base material, from the viewpoints of suppression of ink aggregation unevenness and ink pinning properties.

Note that in the present invention, the term "liquid" refers to a state in which the drying rate of the processing liquid and the ink is 30% or less.

After the processing liquid is applied onto the base material, the processing liquid applied onto the base material may be heated and dried, but it is preferable that the processing liquid and the ink are mixed in a liquid state. Furthermore, in the above-described heating and drying, it is preferable that the ink is applied in a state where a drying rate of the processing liquid is 30% or less.

If the ink is applied with the drying rate of the processing liquid greater than 30%, the processing liquid and the ink might not be mixed in a liquid state.

It is preferable that the ink is applied within 10 seconds after the application of the processing liquid.

In particular, the ink is preferably applied within 0.1 to 5 seconds after the application of the processing liquid, with the drying rate of the processing liquid being within a range of 1 to 10%.

Note that the "drying rate of the processing liquid" is defined by the following formula. (drying rate of processing liquid) = 1·(mass [g] of processing liquid after drying)/ (mass [g] of processing liquid before drying)

By applying the ink in a state where the drying rate of the processing liquid is 30% or less, diffusion of the ink occurs and wettability is improved.

Furthermore, applying the ink within 10 seconds after the application of the processing liquid on the base material can reduce permeation of the processing liquid into an absorbent base material and cissing of the processing liquid on the non-absorbent base material, thereby achieving a higher image quality.

In order to set the drying rate of the processing liquid to 30% or less, for example, the time from the application of the processing liquid to the application of the ink is adjusted, or the temperature of the recording medium is appropriately adjusted.

In addition, when the ink is applied, it is preferable to adjust the amount of the ink droplets so that the amount of the ink applied (also referred to as "applied amount") per unit area of the recording medium is in a range of 2 to 25 times the amount of the processing liquid applied. Thus, high image quality can be achieved. A more preferable range of the addition amount is 3 to 10 times.

### (1.2.4) Coating Film or Mixed Coating Film of Processing Liquid and Ink before Drying Step

As described above, the concepts of the "coating film" and the "mixed coating film" in the present specification include a liquid state having fluidity such as wet spreadability or permeability immediately after the processing liquid is applied onto the base material, immediately after the ink is applied onto the base material, or immediately after the processing liquid and the ink are mixed on the base material, and subsequent states (states after drying).

Furthermore, the above-described "liquid state having fluidity" refers to a state in which a liquid (including a semi-solid state in the present invention) moves so as to wet-spread or penetrate on the base material or the coating film.

### (1.3) Drying Step

The drying step according to the present invention can be carried out as appropriate between the processing liquid application step and the ink application step, between the ink application step and the processing liquid step, after the processing liquid application step and the ink application step, or between the ink application steps. Furthermore, although it can be carried out as appropriate, such as during the processing liquid application process or during the ink application process, it is preferable to dry at once in a drying process including microwaves after the processing liquid application process and the ink application process, from the viewpoint of the apparatus load or the image quality.

Since the microwave has high directivity and can prevent drying of a nozzle during, for example, inkjet coating, drying can be performed immediately after printing without worrying about nozzle drying.

In addition, in a case where a metal salt or the like is included in the processing liquid, the aggregation effect increases, and durability and fastness are improved.

### (1.3.1) Drying Method

In the present invention, as described above, in at least one of the drying steps, the coating film is dried by irradiation with microwaves.

### (Microwave Drying)

The microwave drying conditions of the present invention are as follows.

In the following conditions, a microwave generator manufactured by SPC ELECTRONICS CORPORATION is used, but a commercially available microwave dryer such as a batch type microwave dryer manufactured by Yamamoto Vinita Co., Ltd. may be used.

### <Microwave Conditions>

Microwave generator ESG-2450S-2A manufactured by SPC ELECTRONICS CORPORATION
microwaves (oscillation frequency: 2450 MHz, output power: 100 W)
Irradiation time 3 seconds

Furthermore, in the present invention, in addition to the above-described drying using microwaves, for example, a drying apparatus of a non-contact heating type such as a drying furnace or a hot air blower may be used. Alternatively, a contact heating-type drying apparatus such as a hot plate or a heat roller may be used.

The heating temperature is preferably within a range of 60 to 200 °C, and the heating time is appropriately adjusted in accordance with the type of the base material, the amount of the processing liquid to be applied, and the amount of the ink to be applied.

The drying temperature may be measured by measuring over the entire period of drying of the processing liquid and the ink selecting any one of the following (a) an atmospheric temperature such as an in-furnace temperature or a hot-air temperature in a case where a non-contact heating-type drying apparatus such as a drying furnace or a hot-air blower is used (b) a temperature of a contact heating section in a case where a contact heating type drying apparatus such as a hot plate or a heat roller is used or (c) a surface temperature of the surface to be dried , and the measurement place is preferably (c) the surface temperature of the face to be dried.

As described above, the solvent components of the processing liquid and the ink can be removed by heating the processing liquid application amount and the region where the ink has been applied. At the same time, particularly in the case of a metal base material, the polyvalent metal salt is thermally decomposed by drying at a temperature equal to or higher than the thermal decomposition temperature.

In addition, the image abrasion resistance and the adhesion to the base material become excellent.

### (Hot-Air Drying)

In the drying step, hot air is preferably applied to the mixed coating film of the processing liquid and the ink from the viewpoint of controlling the drying property of the mixed coating film.

The temperature of the hot air used for drying control is preferably within a range of 80 to 100 °C, and the wind velocity is preferably 5 to 40 m/s.

### (1.3.2) Drying Rate of Mixed Coating Film of Processing Liquid and Ink

The mixed coating film of the processing liquid and the ink described above is dried with microwaves, hot air, and other drying methods. It is preferable that the mixed coating film of the processing liquid and the ink has an electrical conductivity in the range of 50 to 600 mS/m from the viewpoints of prevention of excessive printing and suppression of cracking and ignition of the mixed coating film.

Note that the "drying rate of the mixed coating film of the processing liquid and the ink" is defined by the following formula.

(Drying rate of mixed coating film of processing liquid and ink) = 1-(mass [g] of ink after formation of mixed coating film of processing liquid and ink)/ (mass [g] of ink before formation of mixed coating film of processing liquid and ink).

### (1.3.3) Layer Thickness of Mixed Coating Film of Processing Liquid and Ink

The thickness of the mixed coating film obtained as described above is preferably in a range of 0.3 to 3.0 µm, and more preferably in a range of 0.3 to 2.0 µm.

When the thickness of the mixed coating film is 0.3 µm or more, the adhesion and the abrasion resistance of the image are easily enhanced.

In addition, when the thickness of the mixed coating film is 3.0 µm or less, deformation stress imparted to the ink layer can be reduced, thus adhesion of the image is hardly impaired.

### (1.4) Base Material

It is preferable that the base material has a heat-deformable portion, from the viewpoint of imparting excellent design properties and 3D printing effect.

The temperature range of the heat varies depending on the material of the portion of the base material that is deformed by the heat. For example, when a foamed layer containing a foam material having an expansion starting temperature in a range of 100 to 200 °C is present on the base material, the temperature is in a range of ± 50 °C of the expansion starting temperature.

The processing liquid is applied onto the base material (recording medium) by, for example, an inkjet method.

At this time, the applicable recording medium is not particularly limited, and may be the absorbent base material formed of an absorbent material. Alternatively, the recording medium may be a non-absorbent base material made of a non-absorbent material. From the viewpoint of exhibiting the effect of the present invention, the recording medium is preferably the non-absorbent base material.

Note that in the present invention, the term "absorbent" refers to absorbency for water, and the term "non-absorbent" refers to non-absorbency for water.

As the non-absorbent base material, a known plastic film can be used.

Specific examples of the known plastic films include polyester films such as polyethylene terephthalate, polyethylene films, polypropylene films, and polyamide films such as nylon. Other examples include biodegradable films such as a polystyrene film, a polyvinyl chloride film, a polycarbonate film, a polyacrylonitrile film, and a polylactic acid film.

In addition, in order to impart gas barrier properties, moisture-proof properties, aroma retention properties, and the like, a film coated with polyvinylidene chloride on one surface or both surfaces thereof or a film on which a metal oxide is vapor-deposited can also be preferably used.

As the non-absorbent film, either an unstretched film or a stretched film can be preferably used.

The thickness of the base material is, in the case of a plastic film, preferably in the range of 10 to 120 µm, more preferably in the range of 12 to 60 µm.

In addition, as the non-absorbent base material, a metal base material such as a tin plate or a tin-free steel plate (TFS plate, thickness of 0.1 to 0.6 µm) for three piece can applications is also preferably used. For example, it can be suitably used for a packaging material for canned food in which a thermosetting resin is provided as a coating layer.

In the packaging material for canned food, an epoxy-phenol-based coating material or a polyester-based laminating agent is used on the food side in order to, for example, block air, moisture, and light and seal the food inside. In addition, a polyester-based or acryl-based thermosetting coating material is generally used for the outer side.

### 2. Image Forming Apparatus

The image forming apparatus of the present invention is an image forming apparatus having a processing liquid application step, an ink application step, and a drying step, and is characterized by having means for carrying out the image forming method of the present invention.

Thus, the effect of the present invention is expressed, and an image forming method excellent in gloss and color gamut and excellent in pinning property and base material adhesion can be provided.

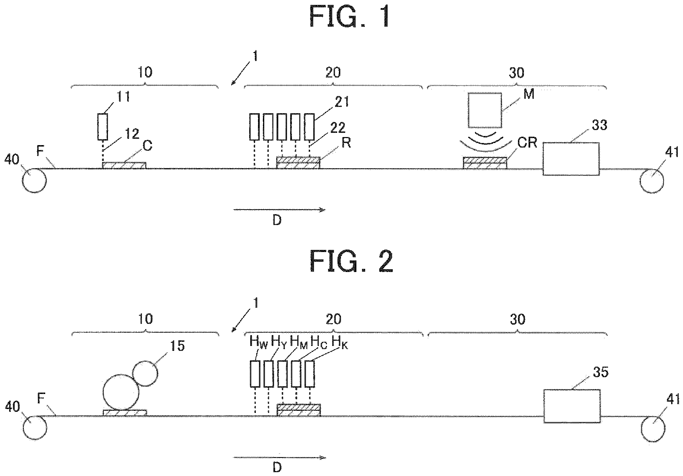

FIG. 1 is a schematic diagram of a recording apparatus preferable for the present invention. However, the present invention is not limited thereto.

The recording apparatus 1 is mainly composed of a processing liquid application section 10 and an ink application section 20.

In the processing liquid application section 10, the processing liquid 12 is applied onto the base material F.

At this time, if necessary, the coating film of the processing liquid formed in the region C to which the processing liquid is applied may be partially dried.

The processing liquid application section 10 is not particularly limited as long as it has a configuration capable of applying the processing liquid to the base material. In the present invention, the processing liquid application method is preferably an inkjet method using the inkjet head 11 from the viewpoint of dryness control.

In the ink application section 20, the ink 22 is applied to a desired range on the processing liquid 12.

The ink application section 20 is not particularly limited as long as it has a configuration capable of applying the ink onto the coating film of the processing liquid formed in the region C on the base material coated with the processing liquid. In the present invention, the ink application method is preferably an inkjet method using the inkjet head 21 from the viewpoint of dryness control.

At this time, in the region on the base material F coated with the processing liquid 12 and the ink 22, there is a region coated with the processing liquid 12 only and a mixed region CR coated with the processing liquid 12 and the ink 22. In the present invention, only the portion of the coating film formed by heating and drying the mixed region CR is the mixed coating film of the processing liquid and the ink.

In FIG. 1, the mixed region CR is formed in a configuration in which the processing liquid is applied onto the base material F prior to the ink, but the mixed region CR may be formed in a configuration in which the ink is applied onto the base material F prior to the processing liquid in a configuration other than FIG. 1.

In the microwave drying section 30, a desired portion is irradiated with microwaves by the microwave drying apparatus M, and if necessary, the mixed coating film of the processing liquid and the ink is heated and dried by the drying section 33.

In such a recording apparatus 1, the processing liquid 12 is applied by the inkjet head 11 onto the base material F fed from the feed roller 40. Next, the ink 22 is applied onto the processing liquid 12 by the inkjet head 21. Next, the mixed coating film of the processing liquid and the ink is formed by heating and drying the region coated with the processing liquid and the ink by the microwave drying section 30.

Thereafter, the base material F on which the above-described mixed coating film is formed is wound up by a winding roller 41, and an image recorded product is obtained.

Although FIG. 1 shows the case where the base material F is a film base material, in the case of the metal base material or the like, the metal base material is placed on the conveyance belt, and the mixed coating film can be formed by one pass coating while the belt is being conveyed.

Furthermore, as an apparatus other than the recording apparatus illustrated in FIG. 1, a flatbed type printer is also preferably used for application of the processing liquid and the ink.

In the flat bed type printer, the base material is fixed, the inkjet head can be moved in a main scanning direction and a sub-scanning direction intersecting the main scanning direction, and printing can be performed without transporting the base material.

Since a metal base material such as tin plate cannot be roll-to-roll conveyed unlike a resin film base material, it is preferable to use the flatbed type printer in which the base material does not need to be conveyed.

Examples of such flatbed type printer include printers described in FIG. 1 of Japanese Unexamined Patent Publication No. 2015-74161 and FIG. 1 of Japanese Unexamined Patent Publication No. 2017-177578.

Note that the inkjet head may be any one of an on-demand inkjet head and the continuous inkjet head.

Examples of the on-demand type inkjet head include an electro-mechanical conversion type including a single cavity type, a double cavity type, a bender type, a piston type, a share mode type, and a shared wall type. Furthermore, an electrothermal conversion method or the like including a thermal inkjet type and a bubble jet ("bubble jet" is a registered trademark of Canon Inc) type is included.

Among the above-described inkjet heads, an inkjet head using a piezoelectric element as an electromechanical conversion element used in an electromechanical conversion method (also referred to as a piezoelectric inkjet head) is preferable.

In addition, when the inkjet printer is a single pass type which may use the inkjet head of either a scan type or a single pass type, it is preferable to use an inkjet head of a line head type.

The inkjet head of the line head method refers to an inkjet head having a length equal to or greater than the width of the printing range (processing liquid application range).

As the inkjet head of the line head method, the inkjet head having a width equal to or larger than the width of a printing range (processing liquid application range) with one inkjet head may be used. Further, a plurality of heads may be combined so as to have a width equal to or larger than the width of the printing range (processing liquid application range).

In addition, a plurality of heads may be provided so that nozzles are arranged in a staggered pattern, and the resolution of these heads as a whole may be increased.

Conveyance speed of the recording medium as the base material can be set within a range of, for example, 1 to 120 m/min. As the conveyance speed increases, the image forming speed increases.

### [Examples]

Hereinafter, the present invention will be specifically described with reference to Examples, but the present invention is not limited thereto. In Examples, "part(s)" or "%" means "part(s) by mass" or "% by mass" unless otherwise specified.

### A. Preparation of Processing Liquid

### (A.1) Preparation of Processing Liquid [1]

300% by mass of calcium acetate-monohydrate as a aggregating agent, 12.00% by mass of dipropyleneglycol (DPG) and 20.00% by mass of propyleneglycol (PG) (1,2-HDO) as solvents, 1.00% by mass of "TEGOWET-KL245" (polyether-modified siloxane copolymer; manufactured by Evonik Operations GmbH) as the surfactant, 0.10% by mass of "Proxel GXL (S)" (1,2-benzisothiazolin-3-one; manufactured by Daiwa Dyestuff Mfg. Co., Ltd.) as an antifungal agent and ion-exchanged water (balance; in an amount such that the total amount becomes 100% by mass) were added with stirring, and the obtained mixed liquid was filtered through a 1 µm filter to obtain a processing liquid [1].

### (Measurement of Electrical Conductivity)

The electrical conductivity of the processing liquid [1] was measured by the above-described method and found to be 659 mS/m.

### (A.2) Preparation of Processing Liquids [2] to [5] and Measurement of Electrical Conductivity

In the preparation of the processing liquid [1], the kinds and addition amounts of the aggregating agent, the solvent, the surfactant, and the antifungal agent, and the addition amount of the ion-exchanged water were changed as described in the following Table I. The processing liquids [2] to [5] were prepared in the same manner as the preparation of the processing liquid [1] except for the foregoing, and the electrical conductivities were measured, and the results in Table I were obtained.

### [Table 1]

**TABLE I**

| PRE-PROCESSING LIQUID No. | AGGREGATING AGENT SOLVENT | | | | | SURFACTANT | ANTIFUNGAL AGENT | WATER | ELECTRICAL CONDUCTIVITY [mS/m] |
|---|---|---|---|---|---|---|---|---|---|
| | TYPE | ADDED AMOUNT [% BY MASS] | DPG [% BY MASS] | PG [% BY MASS] | Gly [% BY MASS] | TEGOWET [% BY MASS] | Proxel [% BY MASS] | ION-EXCHANGED WATER [% BY MASS] | |
| [1] | CALCIUM ACETATE MONOHYDRATE | 3.0 | 12.0 | 20.0 | - | 1.0 | 0.1 | 63. 9 | 659 |
| (2) | NITTOBO CHEMICAL PAA-HCL-05 (40%) | 7.5 | 12.0 | 20.0 | - | 1.0 | 0.1 | 61.9 | 760 |
| [3] | MALONIC ACID | 2.0 | 12.0 | 20.0 | - | 1.0 | 0.1 | 64.9 | 312 |
| (4) | CALCIUM ACETATE MONOHYDRATE | 3.0 | 12.0 | 10.0 | 10.0 | 1.0 | 0.1 | 66.9 | 640 |
| (5) | - | - | 12.0 | 20.0 | 0.0 | 1.0 | 0.1 | 66.9 | 0.1 |

Note that the abbreviations in Table I are as follows.

### (Aggregating Agent)

"calcium acetate": calcium acetate monohydrate

### (Solvent)

"DPG": dipropylene glycol
"PG": propylene glycol
"Gly": glycerin

### (Surfactant)

"TEGOWET": "TEGOWET-KL245" (polyether-modified siloxane copolymer; manufactured by Evonik Operations GmbH)

### (Antifungal Agent)

"Proxel": "Proxel GXL (S)" (1,2-benzisothiazolin-3-one; manufactured by Daiwa Dyestuff Mfg. Co., Ltd.)

### B. Preparation of Pigment Dispersion Liquid to be Contained in Each Ink

### (B.1) Preparation of White Pigment Dispersion Liquid [W]

To 40% by mass of a white pigment as the pigment (titanium dioxide CR-50-2, manufactured by Ishihara Sangyo Kaisya, Ltd.), 4% by mass of "Joncryl 819" (anionic polymer dispersant, acrylic dispersant having dimethylaminoethanol-neutralized carboxy groups, acid number 75 [mgKOH/g], solids content 20% by mass, manufactured by Basf SE), and 4% by mass of "Disperbyk -2019" (solventless wetting dispersant, manufactured by Byk-Chemie GmbH) as the pigment-dispersant, 20% by mass of propyleneglycol (PG) as the solvent, 0.1% by mass of 1,2-benzisothiazolin-3-one (Proxel GXL (S)) as the antifungal agent, and ion-exchanged water (the balance being made up to 100% by mass) were added and premixed.

Thereafter, 0.3 mm zirconia beads were dispersed using a bead mill filled with 50% by volume to prepare a white pigment dispersion liquid [W] having a pigment content of 20% by mass.

The average particle size of the pigment particles contained in the pigment dispersion liquid was 250 nm.

Note that the mean particle size was measured with "Zetasizer Nano S-90" manufactured by Malvern Panalytical.

### (B.2) Preparation of Magenta Pigment Dispersion Liquid [M]

The type of pigment was magenta pigment (mixed crystal of Pigment Red 122 and Pigment Violet 19), and only "Joncryl 819" was added as the pigment dispersant in an amount of 8% by mass. Except for that, the same preparation as the white pigment dispersion liquid [W] was performed to prepare a magenta pigment dispersion liquid [M] having the pigment content of 20% by mass.

The average particle size of the pigment particles contained in the pigment dispersion liquid was 250 nm.

Note that the mean particle size was measured with "Zetasizer Nano S-90" manufactured by Malvern Panalytical.

### (B.3) Preparation of Yellow Pigment Dispersion Liquid [Y], Cyan Pigment Dispersion Liquid [C], and Black Pigment Dispersion Liquid [K]

The magenta pigment was changed to a yellow pigment (Pigment Yellow 150; manufactured by Lanxess Co., Ltd), a cyan pigment (Pigment Blue 15; manufactured by Tokyo Chemical Industry Co., Ltd.), and a black pigment (Pigment Black 7; manufactured by Mitsubishi Chemical Corporation). A yellow pigment dispersion liquid [Y], a cyan pigment dispersion liquid [C], and a black pigment dispersion liquid [K] each having the pigment content of 20% by mass were prepared in the same manner as in the preparation of the magenta pigment dispersion liquid [M] except the above.

The average particle size of the pigment particles contained in the above pigment dispersion liquids was 250 nm in all of the above pigment dispersion liquids.

Note that the mean particle size was measured with "Zetasizer Nano S-90" manufactured by Malvern Panalytical.

### (B.4) Preparation of Silver Nanoparticle Dispersion Liquid [Ag]

The magenta pigments were changed to silver nanoparticle pigments ("Picosil R"; manufactured by Daicel Corporation). A silver nanoparticle dispersion liquid [Ag] having the pigment content of 20% by mass was prepared in the same manner as in the preparation of the magenta pigment dispersion liquid [M] except the above.

Thereafter, 0.3 mm zirconia beads were dispersed using the bead mill filled with 50% by volume to prepare the silver nanoparticle dispersion liquid [Ag] having the pigment content of 20% by mass.

The average particle size of the pigment particles contained in the pigment dispersion liquid was 250 nm.

Note that the mean particle size was measured with "Zetasizer Nano S-90" manufactured by Malvern Panalytical.

### C. Preparation of Ink and Ink Set

### (C.1) Ink Set [1]

### (Preparation of White Ink [W ᵢₙₖ 1])

To 20.00% by mass of the white pigment dispersion liquid [W] as the pigment dispersing liquid, 5.00% by mass of Vylonal MD2000 (polyester, glass-transition temperature of resins only, Tg:67°C, manufactured by Toyobo Co., Ltd) as the resin fine particle dispersion liquid, 25.00% by mass of propyleneglycol (PG), 3.00% by mass of glycerin (Gly) as the solvent, 1.00% by mass of "TEGOWET-KL245" (polyether-modified siloxane copolymer; manufactured by Evonik Operations GmbH) as the surfactant, 0.05% by mass of KF-351A (manufactured by Shin -Etsu Silicone) as the silicone-modified surfactant, 0.10% by mass of "Proxel": "Proxel GXL (S)" (1,2-benzisothiazolin-3-one; manufactured by Daiwa Dyestuff Mfg. Co., Ltd.) as the antifungal agent, and ion-exchanged water (balance: total amount is 100% by mass) were added while stirring, and the resulting mixture liquid was filtered through the 1-µm filter to prepare a white ink [Wᵢₙₖ 1].

There was no substantial composition change before and after the filtration.

### (Preparation of Other Inks)

The type and the amount of the pigment dispersion liquid, the resin fine particle dispersion liquid, the solvent, the surfactant, the antifungal agent and the water were changed as in Table II. The yellow ink [Yᵢₙₖ 1], the magenta ink [Mᵢₙₖ 1], the cyan ink [Cᵢₙₖ 1] and the black ink [Kᵢₙₖ 1] were prepared in the same manner as the white ink [Wᵢₙₖ 1] except for the above.

### (Combination of Inks of Ink Set [1])

An ink set [1] was prepared by combining the white ink [Wᵢₙₖ 1], the yellow ink [Yᵢₙₖ 1], the magenta ink [Mᵢₙₖ 1], the cyan ink [Cᵢₙₖ 1], and the black ink [Kᵢₙₖ 1] prepared above.

### (C.2) Ink Set [2]

### (Preparation of White Ink [Wᵢₙₖ 2])

To 20.00% by mass of the white pigment dispersion liquid [W], 5.00% by mass of SUPERFLEX 460 (aqueous polyurethane dispersion, manufactured by Dai-ichi Kogyo Seiyaku Co., Ltd) as the resin fine particle dispersion liquid, 25.00% by mass of propyleneglycol (PG) and 3.00% by mass of glycerin (Gly) as the solvent, 1.00% by mass of "TEGOWET-KL245" (polyether-modified siloxane copolymer, manufactured by Evonik Operations GmbH) as the surfactant, 0.10% by mass of "Proxel": "Proxel GXL" (1,2-benzisothiazolin-3-one, manufactured by Daiwa Dyestuff Mfg. Co., Ltd.) as the antifungal agent, and ion-exchanged water (balance: total amount is 100% by mass) were added while stirring, and the resulting mixture liquid was filtered through the 1-µm filter to prepare a white ink [Wᵢₙₖ 2].

There was no substantial composition change before and after the filtration.

### (Preparation of Other Inks)

The type and the amount of the pigment dispersion liquid, the resin fine particle dispersion liquid, the solvent, the surfactant, the antifungal agent and the water were changed as in Table II. The yellow ink [Yᵢₙₖ 2], the magenta ink [Mᵢₙₖ 2], the cyan ink [Cᵢₙₖ 2] and the black ink [Kᵢₙₖ 2] were prepared in the same manner as the white ink [Wᵢₙₖ 2] except for the above.

### (Combination of Inks of Ink Set [2])

An ink set [2] was prepared by combining the white ink [Wᵢₙₖ 2], the yellow ink [Yᵢₙₖ 2], the magenta ink [Mᵢₙₖ 2], the cyan ink [Cᵢₙₖ 2], and the black ink [Kᵢₙₖ 2] prepared above.

### (C.3) Ink Set [3]

### (Preparation of White Ink [Wᵢₙₖ 3])

To 20.00% by mass of the white pigment dispersion liquid [W], 5.00% by mass of SUPERFLEX 460 (aqueous polyurethane dispersion, manufactured by Dai-ichi Kogyo Seiyaku Co., Ltd) as the resin fine particle dispersion liquid, 25.00% by mass of propyleneglycol (PG), and 3.00% by mass of glycerin (Gly) as the solvent, 1.00% by mass of "TEGOWET-KL245" (polyether-modified siloxane copolymer, manufactured by Evonik Operations GmbH) as the surfactant, 0.10% by mass of "Proxel": "Proxel GXL (S)" (1,2-benzisothiazolin-3-one, manufactured by Daiwa Dyestuff Mfg. Co., Ltd.) as the antifungal agent, and ion-exchanged water (balance: total amount is 100% by mass) were added while stirring, and the resulting mixture liquid was filtered through the 1-µm filter to prepare a white ink [W ᵢₙₖ 3].

There was no substantial composition change before and after the filtration.

### (Preparation of Other Color Inks)

The type and the amount of the pigment dispersion liquid, the resin fine particle dispersion liquid, the solvent, the surfactant, the antifungal agent and the water were changed as in Table II. The yellow ink [Yᵢₙₖ 3], the magenta ink [Mᵢₙₖ 3], the cyan ink [Cᵢₙₖ 3] and the black ink [Kᵢₙₖ 3] were prepared in the same manner as the white ink [Wᵢₙₖ 3] except for the above.

### (Preparation of Other Silver Nanoparticle Ink)

To 20.00% by mass of the silver nanoparticle dispersion liquid [Ag], 20.00% by mass of propyleneglycol (PG) as the solvent, 1.00% by mass of "TEGOWET-KL245" (polyether-modified siloxane copolymer; manufactured by Evonik Operations GmbH) as the surfactant, 0.10% by mass of "Proxel": "Proxel GXL (S)" (1,2-benzisothiazolin-3-one; manufactured by Daiwa Dyestuff Mfg. Co., Ltd.) as the antifungal agent, and ion-exchanged water (balance: total amount is 100% by mass) were added while stirring, and the resulting mixture liquid was filtered through the 1-µm filter to prepare a silver nanoparticle-containing ink [Agᵢₙₖ3],

There was no substantial composition change before and after the filtration.

### (Combination of Inks of Ink Set [3])

An ink set [3] was prepared by combining the white ink [Wᵢₙₖ 3], the yellow ink [Yᵢₙₖ 3], the magenta ink [Mᵢₙₖ 3], the cyan ink [Cᵢₙₖ 3], the black ink [Kᵢₙₖ 3], and the silver nanoparticle-containing ink [Agᵢₙₖ3] prepared above.

### [Table 2]

**TABLE II**

| INK SET No. | INK COLOR | PIGMENT DISPERSION LIQUID | | | | | | RESIN FINE PARTICLE DISPERSION LIQUID * 1 | | SOLVENT | | SURFACTANT | ANTIFUNGAL AGENT | WATER | ELECTRICAL CONDUCTIVITY [mS/m] |
|---|---|---|---|---|---|---|---|---|---|---|---|---|---|---|---|
| | | WHITE (W) | YELLOW [Y] | MAGENTA (M) | CYAN [C] | BLACK [K] | SILVER NANOPARTICLE (Ag) | FLEX 460 | MD 2000 | PG | Gly | TEGOWET | Proxel | ION-EXCHANGED WATER | |
| | | [% BY MASS] | | | | | | [% BY MASS] | | [% BY MASS] | | [% BY MASS] | [% BY MASS] | [% BY MASS] | |
| (1) | WHITE(Wᵢₙₖ1) | 20.0 | - | - | - | - | - | - | 5.0 | 25.0 | 3.0 | 1.0 | 0.1 | 45.9 | 50 |
| | YELLOW(Y_{Ink}1) | - | 20.0 | - | - | - | - | - | 5.0 | 25.0 | 3.0 | 1.0 | 0.1 | 45.9 | 30 |
| | MAGENTA(Mᵢₙₖ1) | - | - | 20.0 | - | - | - | - | 5.0 | 25.0 | 3.0 | 10 | 0.1 | 45.9 | 30 |
| | CYAN(Ciₙₖ1) | - | - | - | 20.0 | - | - | - | 5.0 | 25.0 | 3.0 | 1.0 | 0.1 | 45.9 | 30 |
| | BLACK(Kᵢₙₖ1) | - | - | - | - | 20.0 | - | - | 5.0 | 25.0 | 3.0 | 1.0 | 0.1 | 45.9 | 40 |
| (2) | WHITEC (Wᵢₙₖ2) | 20.0 | - | - | - | - | - | 5.0 | - | 25.0 | 3.0 | 1.0 | 0.1 | 45.9 | 50 |
| | YElLLOW(Yᵢₙₖ2) | - | 20.0 | - | - | - | - | 5.0 | - | 25.0 | 3.0 | 1.0 | 0.1 | 45.9 | 30 |
| | MAGENTA(Mᵢₙₖ2 | - | - | 20.0 | - | - | - | 5.0 | - | 25.0 | 3.0 | 1.0 | 0.1 | 45.9 | 30 |
| | CYAN(Cᵢₙₖ2) | - | - | - | 20.0 | - | - | 5.0 | - | 25.0 | 3.0 | 1.0 | 0.1 | 45.9 | 30 |
| | BLACKC(Kᵢₙₖ2) | - | - | - | - | 20.0 | - | 5.0 | - | 25.0 | 3.0 | 1.0 | 0.1 | 45.9 | 40 |
| [3] | WHITE(CWᵢₙₖ3) | 20.0 | - | - | - | - | - | 5.0 | - | 25.0 | 3.0 | 1.0 | 0.1 | 45.9 | 50 |
| | YELLOW(Yᵢₙₖ3) | - | 20.0 | - | - | - | - | 5.0 | - | 25.0 | 3.0 | 1.0 | 0.1 | 45.9 | 30 |
| | MAGENTA CMᵢₙₖ3) | - | - | 20.0 | - | - | - | 5.0 | - | 25.0 | 3.0 | 1.0 | 0.1 | 45.9 | 30 |
| | CYAN(Cᵢₙₖ3) | - | - | - | 20.0 | - | - | 5.0 | - | 25.0 | 3.0 | 1.0 | 0.1 | 45.9 | 30 |
| | BLACKC[Kᵢₙₖ3] | - | - | - | - | 20.0 | - | 5.0 | - | 25.0 | 3.0 | 1.0 | 0.1 | 45.9 | 40 |
| | SILVER(Agᵢₙₖ3) | - | - | - | - | - | 20.0 | - | - | 20.0 | | 1.0 | 0.1 | 58.9 | 1800 |

| | | | | | | | | | | | | | | | |
|---|---|---|---|---|---|---|---|---|---|---|---|---|---|---|---|
| * 1: RESIN IS ADDED BY SOLID CONTENT CONVERSION. | | | | | | | | | | | | | | | |

Note that the abbreviations in Table II are as follows.

### (Resin)

"Flex 460": "Super Flex 460" (polyurethane water dispersion anionic manufactured by Dai-ichi Kogyo Seiyaku Co., Ltd)

"MD2000": "VYLONAL MD2000" (resins which do not aggregate, nonionic, polyester, glass-transition temperature of resins only Tg:67°C, manufactured by Toyobo Co., Ltd).

### (Solvent)

"PG": propylene glycol
"Gly": glycerin

### (Surfactant)

"TEGOWET": "TEGOWET-KL245" (polyether-modified siloxane copolymer; manufactured by Evonik Operations GmbH)

### (Antifungal Agent)

"Proxel": "Proxel GXL (S)" (1,2-benzisothiazolin-3-one; manufactured by Daiwa Dyestuff Mfg. Co., Ltd.)

### D. Evaluation of Drawing Performance

Printing of each of the printed products produced below was performed under an environment of 25 °C and 50% RH with the conveyance speed set to 300 mm/sec.

### (D.1) Image Forming Method 1 (Roll Coater Application of Processing Liquid)

### [Production of Printed Product No. 1]

A printed product was produced with the configuration of the image forming method as shown in FIG. 2, and the drawing property was evaluated.

The conveyance direction of the base material was the D direction in FIG. 2, and a white PET base material ("Crisper K1211" manufactured by TOYOBO CO., LTD) was used as the recording medium F.

A scan type printer equipped with five independent drive type inkjet heads (360npi, discharge amount 6pL or 14pL, 1024 nozzles) manufactured by Konica Minolta, Inc. (H _{w}, H_{Y}, H_{M}, H_{C}, H_{K}) was prepared. This was filled with the ink set [1].

### (Processing Liquid Application Process)

In the processing liquid application section 10, the processing liquid [1] was applied onto the entire surface of the base material using the roll coater 15.

Note that the coating of the processing liquid using the above-described roll coater in the present invention was performed at a speed of 400 mm/s and a coating amount of 3.0 g/m².

### (Ink Application Process)

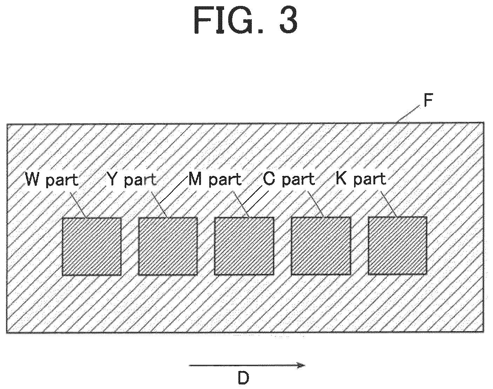

In the ink application section 20, five inkjet heads (H_{w},. H_{Y}, H_{M}, H c, H_{K}) each ink of the ink set [1] ([Wᵢₙₖ 1], [Yᵢₙₖ 1], [Mᵢₙₖ 1], [Cᵢₙₖ 1], [Kᵢₙₖ 1]) was applied by inkjet application to parts Wₚₐᵣₜ, Yₚₐᵣₜ, Mₚₐᵣₜ, Cₚₐᵣₜ and Kₚₐᵣₜ in FIG. 3 in the form of a square of 5 cm × 5 cm having a 5 mm width interval at an ink application amount of 12.0 g/m ² and mixed coating film of the processing liquid and the ink was formed.

### (Drying Process)

In the microwave drying section 30, microwave treatment was performed in the drying apparatus 35 to perform the drying, and the printed product No. 1 was produced.

The microwave treatment was performed under the following conditions.

### <Microwave Conditions>

Drying was performed with microwaves (oscillation frequency: 2450 MHz, power: 100 W) for 3 seconds using the microwave generator (ESG-2450S-2A SPC ELECTRONICS CORPORATION).

### [Production of Printed Product No. 2]

Printed product No. 2 was produced according to the same procedure as the printed product No. 1 except that in the drying step, drying was performed by performing microwave treatment and hot-air treatment at the same time in the drying apparatus 35.

The conditions of the hot air treatment are shown below.

### <Hot Air Treatment Conditions>

The hot-air treatment was performed at a temperature of 70°C and a wind velocity of 16 m/sec.

### [Production of Printed Product No. 3]

Printed product No. 3 was produced according to the same procedure as printed product No. 1 in all aspects other than that the processing liquid [2] was applied instead of the processing liquid [1] in the processing liquid application step.

### [Production of Printed Product No. 4]

Printed product No. 4 was produced in the same manner as the printed product No. 1, except that processing liquid [3] was applied instead of processing liquid [1] in the processing liquid application step.

### [Production of Printed Product No. 5]

Printed product No. 5 was produced according to the same procedure as the printed product No. 1 except that ink set [2] was filled instead of ink set [1].

### [Production of Printed Product No. 6]

Printed product No. 6 was produced according to the same procedure as the printed product No. 1 except that in the drying step, the microwave treatment was not performed in the drying apparatus 35 and the drying was performed by hot-air treatment.

The hot air treatment was performed under the same conditions as in the case of the printed product No. 2.

### [Production of Printed Product No. 7]

Printed product No. 7 was produced according to the same procedure as the printed product No. 1 in all aspects other than that no processing liquid was applied in the processing liquid application step.

### [Production of Printed Product No. 8]

Printed product No. 8 was produced in the same manner as printed product No. 1, except that processing liquid [5] was applied instead of the processing liquid [1] in the processing liquid application step.

### (D.2) Image Forming Method 2 (Inkjet Application of Processing Liquid)

### [Production of Printed Product No. 9]

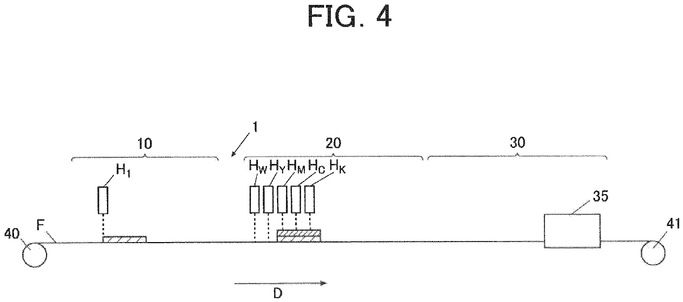

A printed product was produced with the configuration of the image forming method as shown in FIG. 4, and the drawing property was evaluated.

The conveyance direction of the base material was the D direction in FIG. 4, and a white PET base material ("Crisper K1211" manufactured by TOYOBO CO., LTD) was used as the recording medium F.

The scan type printer equipped with five independent drive type inkjet heads (360npi, discharge amount 6pL or 14pL, 1024 nozzles) manufactured by Konica Minolta, Inc. (H _{w}, H_{Y}, H_{M}, H_{C}, H_{K}) was prepared. This was filled with the ink set [1].

Furthermore, an inkjet head H1 for application of the processing liquid was prepared.

### (Processing Liquid Application Process)

In the processing liquid application section 10, the processing liquid [1] was coated over the entire surface of the base material using the inkjet head H1, with the liquid amount set to 6pL, the maximum printing rate set to 37%, and the application amount of the processing liquid in the coating region set to 3.0 g/m ².

### (Ink Application Process)

In the ink application section 20, five inkjet heads (H_{w},. H_{Y}, H_{M}, H_{C}, H_{K}) each ink of the ink set [1] ([W ᵢₙₖ 1], [Y ᵢₙₖ 1], [M ᵢₙₖ 1], [C ᵢₙₖ 1], [Kᵢₙₖ 1]) was applied by inkjet application to parts Wₚₐᵣₜ, Yₚₐᵣₜ, Mₚₐᵣₜ, Cₚₐᵣₜ and Kₚₐᵣₜ in FIG. 3 in the form of a square of 5 cm × 5 cm having a 5 mm width interval at an ink application amount of 12. 0 g/m ² and mixed coating film of the processing liquid and the ink was formed.

### (Drying Process)

In the microwave drying section 30, microwave treatment was performed in the drying apparatus 35 to perform the drying, and the printed product No. 9 was produced.

The microwave treatment was performed under the following conditions.

### <Microwave Conditions>

Drying was performed with microwaves (oscillation frequency: 2450 MHz, power: 100 W) for 3 seconds using the microwave generator (ESG-2450S-2A SPC ELECTRONICS CORPORATION).

### [Production of Printed Product No. 10]

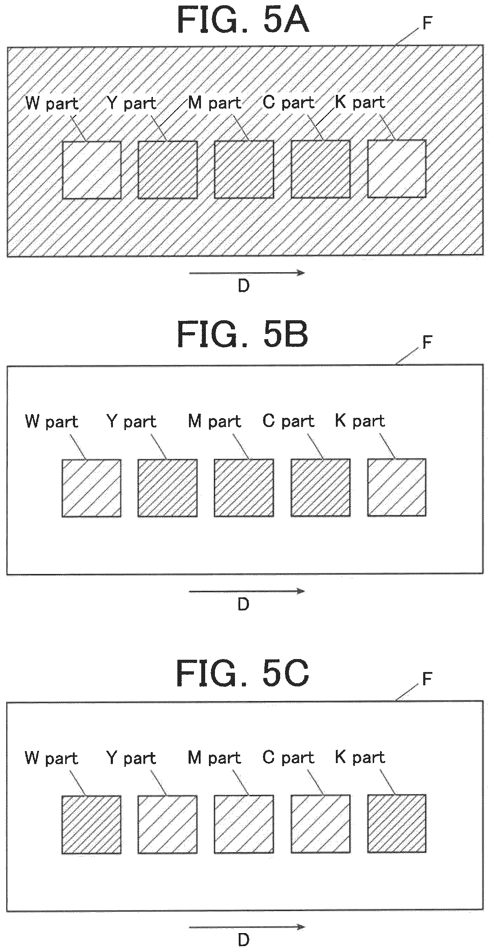

In the processing liquid application step, 1.0 g/m² of the processing liquid [1] was applied to the W ₚₐᵣₜ and the K ₚₐᵣₜ portions in the manner of FIG. 5A (pattern 1). The processing liquid [1] was also applied to the Yₚₐᵣₜ, Mₚₐᵣₜ and the C ₚₐᵣₜ portion at 6.0 g/m². Furthermore, the processing liquid [1] was applied to the portion other than the ink-applied portion in the amount of 3.0 g/m². Otherwise, the printed product No. 10 was produced according to the same procedure as the printed product No. 9.

Note that the method for applying the processing liquid to the printed product No. 10 is referred to as pattern 1 of the processing liquid patterns in Table III.

### [Production of Printed Product No. 11]

Printed product No. 11 was produced according to the same procedure as the printed product No. 10 except that in the drying step, the microwave treatment was performed in the drying apparatus and then the hot-air treatment was performed.

The hot air treatment was performed under the same conditions as in the case of the printed product No. 2.

### [Production of Printed Product No. 12]

In the processing liquid application step, 1.0 g/m² of the processing liquid [1] was applied to the W ₚₐᵣₜ and the K ₚₐᵣₜ portions in the manner of FIG. 5B (pattern 2). The processing liquid [1] was also applied to the Yₚₐᵣₜ, Mₚₐᵣₜ and the C ₚₐᵣₜ portion at 6.0 g/m². Note that the processing liquid [1] was not applied to the portion other than the ink-applied portion. Otherwise, the printed product No. 12 was produced according to the same procedure as the printed product No. 9.

Note that the method for applying the processing liquid to the printed product No. 12 is referred to as pattern 2 of the processing liquid patterns in Table III.

### [Production of Printed Product No. 13]

Printed product No. 13 was produced in the same manner as printed product No. 12 except that processing liquid [2] was applied instead of processing liquid [1] in the processing liquid application step.

### [Production of Printed Product No. 14]

Printed product No. 14 was produced in the same manner as printed product No. 12, except that processing liquid [3] was applied instead of the processing liquid [1] in the processing liquid application step.

### [Production of Printed Product No. 15]

Printed product No. 15 was produced according to the same procedure as the printed product No. 10 except that ink set [2] was filled instead of ink set [1].

### [Production of Printed Product No. 16]

In the processing liquid application step, 6.0 g/m² of the processing liquid [4] was applied to the W ₚₐᵣₜ and the K ₚₐᵣₜ portions in the manner of FIG. 5C. The processing liquid [4] was also applied to the Yₚₐᵣₜ, Mₚₐᵣₜ and the C ₚₐᵣₜ portion at 1.0 g/m². Note that the processing liquid [4] was not applied to any portion other than the ink-applied portion. Otherwise, the printed product No. 16 was produced according to the same procedure as the printed product No. 9.

Note that the method for applying the processing liquid to the printed product No. 16 is referred to as pattern 3 of the processing liquid patterns in Table III.

### [Production of Printed Product No. 17]

Printed product No. 17 was produced according to the same procedure as the printed product No. 10 except that in the drying step, the microwave treatment was not performed in the drying apparatus and the hot-air treatment was performed.

The hot air treatment was performed under the same conditions as in the case of the printed product No. 2.

### [Production of Printed Product No. 18]

Printed product No. 18 was produced according to the same procedure as the printed product No. 9 in all aspects other than that no processing liquid was applied in the processing liquid application step.

### [Production of Printed Product No. 19]

Printed product No. 19 was produced in the same manner as printed product No. 10, except that processing liquid [5] was applied instead of the processing liquid [1] in the processing liquid application step.

### (F.3) Image Forming Method 3 (Inkjet Application of Processing Liquid for Metallic Nanoparticle-Containing Ink)

### [Production of Printed Product No. 20]

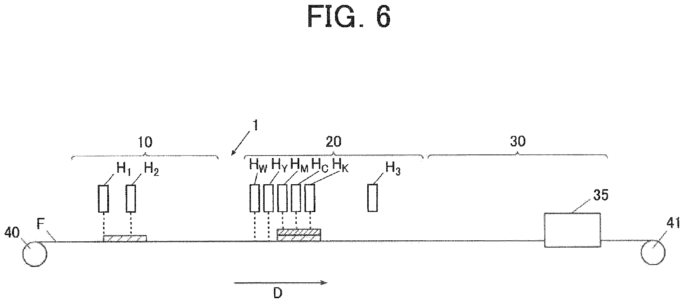

A printed product was produced with the configuration of the image forming method as shown in FIG. 6, and the drawing property was evaluated.

The conveyance direction of the base material was the D direction in FIG. 4, and a white PET base material ("Crisper K1211" manufactured by TOYOBO CO., LTD) was used as the recording medium F.

In addition to five inkjet heads (H _{w}, H_{Y}, H_{M}, H_{C} H_{K}), the ink jet head H3 for the metallic nanoparticle-containing ink was mounted to prepare a scan type printer having six inkjet heads. The ink set [3] was filled so that the silver nanoparticle-containing ink [Ag ᵢₙₖ3] was ejected from the inkjet head H3.

In addition, the inkjet head H1 and the inkjet head H2 were prepared for application of the processing liquid.

### (Processing Liquid Application Process)

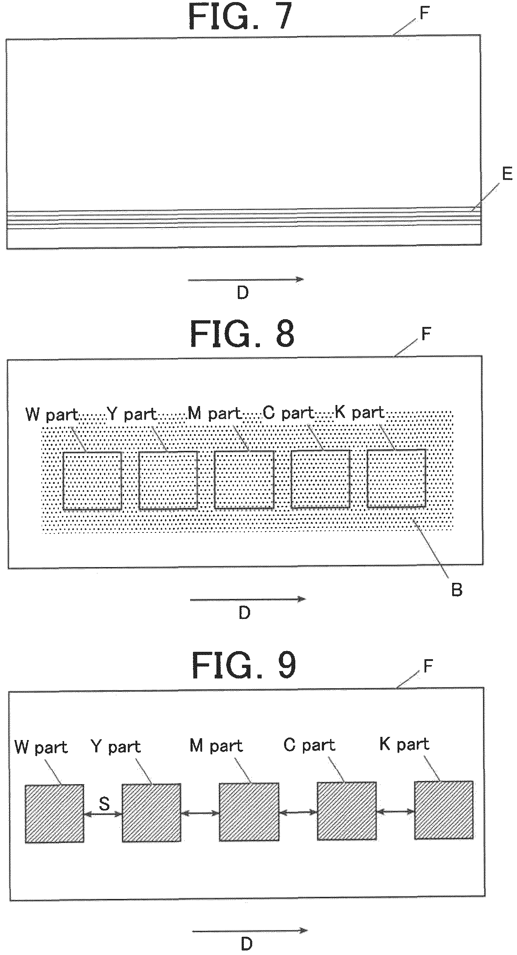

In the processing liquid application step, as shown in FIG. 5B (pattern 2), 1.0 g/m ² of the processing liquid [4] was applied to the parts Wₚₐᵣₜ and Kₚₐᵣₜ. At the same time as the application of 6.0g/m² of the processing liquid [4] in Yₚₐᵣₜ, Mₚₐᵣₜ and Cₚₐᵣₜ, the processing liquid [4] was applied to a portion E in FIG. 7 with the inkjet head H2 in the amount of 1.5g/m² with 3 cm width.

### (Ink Application Process)

In the ink application section 20, five inkjet heads (H_{w}, H^{Y}, H_{M}, H_{C}, H_{K}) are used to apply each ink ([W ᵢₙₖ 1], [Y ᵢₙₖ 1], [M ᵢₙₖ 1], [C ᵢₙₖ 1], [Kᵢₙₖ 1]) other than the silver nanoparticle-containing ink [Ag ᵢₙₖ 3] in the ink set [3] to the Wₚₐᵣₜ, Yₚₐᵣₜ, M ₚₐᵣₜ, Cₚₐᵣₜ, and K ₚₐᵣₜ of FIG. 7 by inkjet coating in the form of a square that is 5 cm × 5 cm with a 5 mm width interval in such a manner that the amount of ink applied to the coated region is 12. 0 g/m². With this, a mixed coating film of the processing liquid and the ink was formed in the Wₚₐᵣₜ, Yₚₐᵣₜ, Mₚₐᵣₜ, Cₚₐᵣₜ, and Kₚₐᵣₜ. The silver nanoparticle-containing ink [Ag ᵢₙₖ 3] was inkjet coated from the inkjet head H3 at the position shown in FIG. 7 in the form of a square that is 5 cm × 5 cm with a 5 mm width interval in such a manner that the amount of ink applied is 12.0 g/m². With this, a mixed coating film of the processing liquid and the silver nanoparticle-containing ink [Ag ᵢₙₖ 3] was formed.

### (Drying Process)

In the microwave drying section 30, microwave treatment was performed in the drying apparatus 35 to perform the drying, and the printed product No. 20 was produced.

The microwave treatment was performed under the following conditions.

### <Microwave Conditions>

Drying was performed with microwaves (oscillation frequency: 2450 MHz, power: 100 W) for 3 seconds using the microwave generator (ESG-2450S-2A SPC ELECTRONICS CORPORATION).

### (F.4) Image Forming Method 4 (Inkjet Application of Processing Liquid to Foam Layer)

### [Production of Printed Product No. 21]

A printed product was produced with the configuration of the image forming method as shown in FIG. 4, and the drawing property was evaluated.

The conveyance direction of the base material was the D direction in FIG. 4. As the recording medium F, a base material having a foam layer was used, the foam layer being formed by applying an application liquid [21] containing foam beads ADVANCEL (manufactured by Sekisui Chemical Co., Ltd) to a white PET base material (Crisper K1211) with a wire bar at a thickness of 50µm and drying the application liquid in the oven at 80 °C for 10 minutes.

### (Configuration of Application Liquid [21])

ADVANCEL foam particles "EML101" (manufactured by Sekisui Chemical Co., Ltd) 5g
"Vylonal MD2000" (40% solids) 35 g
isopropyl alcohol 30 g
water 30g

The scan type printer equipped with five independent drive type inkjet heads (360npi, discharge amount 6pL or 14pL, 1024 nozzles) manufactured by Konica Minolta, Inc. (H_{w}, H_{Y}, H_{M}, H_{C}, H_{K}) was prepared. This was filled with the ink set [1].

Furthermore, the inkjet head H1 for application of the processing liquid was prepared.

### (Processing Liquid Application Process)

In the processing liquid application section 10, the processing liquid [1] was applied to the foam layer portion B of the base material having the foam layer at 3. 0 g/m²using the inkjet head H1.

### (Ink Application Process)

In the ink application section 20, five inkjet heads (H_{w},. H_{Y}, H_{M}, H_{C}, H_{K}) each ink of the ink set [1] ([Wᵢₙₖ 1], [Yᵢₙₖ 1], [Mᵢₙₖ 1], [Cᵢₙₖ 1], [Kᵢₙₖ 1]) was applied by inkjet application to parts Wₚₐᵣₜ, Yₚₐᵣₜ, Mₚₐᵣₜ, Cₚₐᵣₜ and Kₚₐᵣₜ in FIG. 8 in the form of a square of 5 cm × 5 cm having a 5 mm width interval at an ink application amount of 12.0 g/m² and mixed coating film of the processing liquid and the ink was formed on the foam layer portion B of the base material including the foam layer.

### (Drying Process)

In the microwave drying section 30, microwave treatment was performed in the drying apparatus 35 to perform the drying, and the printed product No. 21 was produced.

The microwave treatment was performed under the following conditions.

### <Microwave Conditions>

Drying was performed with microwaves (oscillation frequency: 2450 MHz, power: 100 W) for 3 seconds using the microwave generator (ESG-2450S-2A SPC ELECTRONICS CORPORATION).

### G. Various Evaluations

### (G. 1) Gloss

### (Evaluation Method)

The color printed part of each printed product was measured with a Satotech glossmeter "MJ-GM26" in a 60 ° mode. The results are shown in Table III.

### (Evaluation Criteria)

⊚: Glossiness of 40 or more.
∘: Glossiness of 30 or more and less than 40.
△: Glossiness 25 or more and less than 30.

### (G. 2) Bleeding

### (Evaluation Method)

How much spaces S at four positions between the Wₚₐᵣₜ, Yₚₐᵣₜ, Mₚₐᵣₜ, Cₚₐᵣₜ and the Kₚₐᵣₜ were shifted from a design value (5mm) was measured with a digital microscope VHX 500F manufactured by Keyence Corporation. Then, the evaluation was performed according to the following evaluation criteria, and if the result was "Δ" or better, it was evaluated as having practicality (see FIG. 9). The results are shown in Table III.

### (Evaluation Criteria)

⊚: The mean value of deviations of four spaces (5mm) is 100 µm or less.
∘: The mean value of the deviations of the four spaces (5mm) is 200 µm or less.
×: The mean value of the deviations of the four spaces (5mm) is 300 µm or more.

### (G.3) Color gamut

### (Evaluation Method)

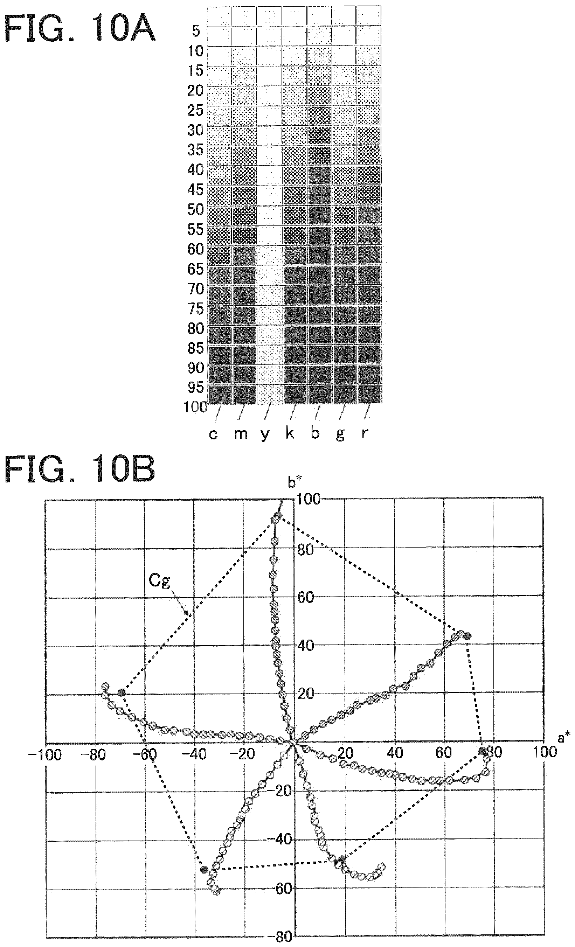

In the printed products No. 1 to 9 (Examples 1 to 6 and Comparative Examples 1 to 3) a gradation pattern image of a density gradation chart composed of regions of a cyan solid region c, a magenta solid region m, a yellow solid region y, a black solid region k, a blue solid region b, a green solid region g, and a red solid region r as illustrated in FIG. 10A was printed on white PET ("Crisper K1211" manufactured by Toyobo Co., Ltd), and the printed product obtained by drying was measured for color values L*a*b* using a spectrophotometer CM- Konica 26dG (manufactured by Konica Minolta, Inc).

The obtained measurement values were graphed on a plane of a'b* and evaluated according to the following evaluation criteria. A result of "∘" or higher was evaluated as having practicality.

The results are shown in Table III.

Note that in Table III, the ink set [3] containing the silver nanoparticle-containing ink was used for the printed product No. 20. Since the color gamut of the silver nanoparticle-containing ink cannot be evaluated by comparison with Japan Color, only the inks other than the silver nanoparticle-containing ink are evaluated.

Japan Color refers to a range indicated by a dotted line on an a*b* plane as shown in FIG. 10B with reference to a color reproduction region (recommended value) in a L*a*b* color space defined by "ISO-compliant Japan Color Sheet For Printing 2011 ".

In Example 7 and thereafter, the 5 × 5 cm YMCK portion of the printed products was measured for L*a*b* with a colorimeter and similarly plotted on the a *b* plane and evaluated according to the following evaluation criteria.

Note that in the following evaluation criteria, the term "color gamut is equal to or greater than Japan Color" refers to a case where obtained measured values overlap in the form of Japan Color formed by broken lines on the plane of a*b*. Alternatively, it refers to the case where measured values are plotted outside the shape of the Japan Color.

### (Evaluation Criteria)

o: The color gamut is Japan Color or more.
×: The color gamut is narrower than Japan Color.

### (G.4) Printed Product Wrinkling

### (Evaluation Method)

Each printed product was visually evaluated according to the following evaluation criteria.

As used herein, the term "printed product winkling" refers to a state in which the printed product absorbs moisture and undulates, i.e., is wrinkled.

### (Evaluation Criteria)

∘: No wrinkles.
×: Wrinkled.

### (G.5) Adhesion

### (Evaluation Method)

Cuts were made in the solid image (Wₚₐᵣₜ, Yₚₐᵣₜ, Mₚₐᵣₜ, Cₚₐᵣₜ and Kₚₐᵣₜ part) with a cutter at 1 mm intervals in a 5 × 5 grid pattern, and a tape peeling test was performed by a cross-cut method, and evaluation was performed according to the following evaluation criteria. The results are shown in Table III.

### <Cross-Cut Method>

(1) Eleven cuts reaching the base material are made on the test surface using a cutter guide to make a grid with 100 squares (the intervals between the cuts are 1 mm, 2 mm, and 5 mm).
(2) A Sellotape (Registered trademark) is strongly pressure-bonded to the grid portion, the end of the tape is peeled off at once at an angle of 45 °, and the state of the base stitch is evaluated by comparison with a standard drawing.

### (Evaluation Criteria)

⊚: There is no peeling by the tape.
∘: Although there is peeling of 1 square or more and less than 3 squares of the grid-like cuts, it is at a practically acceptable level.
△: There is peeling with the grid-like cut of 3 squares or more and less than 6 squares, but it is at a satisfactory level.
×: Peeling occurred in 6 or more squares of the grid-like cuts, which is a practically unacceptable level.

### [Table 3]

**TABLE III**

| EXAMPLE OR COMPARATIVE EXAMPLE | PRINTED PRODUCT No. | IMAGE FORMING METHOD No. | PRE-PROCESSING LIQUID | | | INK SET No. | DRYING METHOD | | EVALUATION (* 2) | | | | |
|---|---|---|---|---|---|---|---|---|---|---|---|---|---|
| | | | No. | APPLIED PORTION | APPLICATION METHOD | | MICROWAVE | HOT AIR | GLOSS | BLEEDING | COLOR GAMUT | PRINTED PRODUCT WRINKLING | ADHESION |
| EXAMPLE 1 | 1 | 1 | (1) | ENTIRE SURFACE | ROLL COATER | (1) | YES | - | ⊚ | ⊚ | ○ | ○ | ○ |
| EXAMPLE 2 | 2 | 1 | (1) | ENTIRE SURFACE | ROLL COATER | (1) | YES | - | ⊚ | ⊚ | ○ | ○ | ○ |
| EXAMPLE 3 | 3 | 1 | (2) | ENTIRE SURFACE | ROLL COATER | (1) | YES | - | ○ | ○ | ○ | ○ | ○ |
| EXAMPLE 4 | 4 | 1 | (3) | ENTIRE SURFACE | ROLL COATER | (1) | YES | - | ○ | ○ | ○ | ○ | ○ |
| EXAMPLE 5 | 5 | 1 | (1) | ENTIRE SURFACE | ROLL COATER | [2] | YES | - | ○ | ○ | ○ | ○ | ⊚ |
| COMPARATIVE EXAMPLE 1 | 6 | 1 | (1) | ENTIRE SURFACE | ROLL COATER | (1) | - | YES | △ | ○ | × | ○ | △ |
| COMPARATIVE EXAMPLE 2 | 7 | 1 | - | - | - | (1) | YES | - | ○ | × | × | × | △ |
| COMPARATIVE EXAMPLE 3 | 8 | 1 | (5) | ENTIRE SURFACE | ROLL COATER | (1) | YES | - | △ | ○ | × | × | △ |
| EXAMPLE 6 | 9 | 2 | (1) | ENTIRE SURFACE | INKJET H1 | (1) | YES | - | ⊚ | ⊚ | ○ | ○ | ○ |
| EXAMPLE 7 | 10 | 2 | (1) | PATTERN 1 | INKJET H1 | (1) | YES | - | ⊚ | ⊚ | ○ | ○ | ○ |
| EXAMPLE 8 | 11 | 2 | (1) | PATTERN 1 | INKJET H1 | (1) | YES | YES | ⊚ | ⊚ | ○ | ○ | ○ |
| EXAMPLE 9 | 12 | 2 | (1) | PATTERN 2 | INKJET H1 | (1) | YES | - | ⊚ | ⊚ | ○ | ○ | ○ |
| EXAMPLE 10 | 13 | 2 | (2) | PATTERN 2 | INKJET H1 | (1) | YES | - | ○ | ○ | ○ | ○ | ⊚ |
| EXAMPLE 11 | 14 | 2 | (3) | PATTERN 2 | INKJET H1 | (1) | YES | - | ○ | ○ | ○ | ○ | ○ |
| EXAMPLE 12 | 15 | 2 | (1) | PATTERN 1 | INKJET H1 | (2) | YES | - | ⊚ | ⊚ | ○ | ○ | ⊚ |
| EXAMPLE 13 | 16 | 2 | (4) | PATTERN 3 | INKJET H1 | (1) | YES | - | ○ | ○ | ○ | ○ | ○ |
| COMPARATIVE EXAMPLE 4 | 17 | 2 | (1) | PATTERN 1 | INKJET H1 | (1) | - | YES | △ | ○ | × | ○ | △ |
| COMPARATIVE EXAMPLE 5 | 18 | 2 | - | - | - | (1) | YES | - | ○ | × | × | × | △ |
| COMPARATIVE EXAMPLE 6 | 19 | 2 | (5) | PATTERN 1 | INKJET H1 | (1) | YES | - | △ | ○ | × | × | △ |
| EXAMPLE 14 | 20 | 3 | (1) | PATTERN 2 | INKJET H1 | (3) | YES | - | ⊚ (⊚) | ⊚ (⊚) | ○ (*3) | ○ (○) | ○ (○) |
| | | | (4) | PATTERN 4 | INKJET H2 | | | | | | | | |
| EXAMPLE 15 | 21 | 4 | (1) | PATTERN 5 | INKJET H1 | (1) | YES | - | ⊚ | ⊚ | ○ | ○ | ○ |

| | | | | | | | | | | | | | |
|---|---|---|---|---|---|---|---|---|---|---|---|---|---|
| * 2: EVALUATION IN PARENTHESIS () IN TABLE SHOW EVALUATION OF SILVER NANOPARTICLE CONTAINING INK. * 3: ONLY EVALUATION OF SILVER NANOPARTICLE CONTAINING INK IS NOT PERFORMED. EVALUATION IN TABLE SHOWS EVALUATION OF INK OTHER THAN SILVER NANOPARTICLE CONTAINING INK. | | | | | | | | | | | | | |

### H. Conclusion

As can be seen from the above Table III, there is no evaluation of △ and × in the evaluation of Examples, and it can be seen that Examples are comprehensively superior to Comparative Examples.

### Industrial Applicability

An image forming method and an image forming apparatus can be provided that are excellent in gloss and color gamut and excellent in pinning property and base material adhesion.

### Reference Signs List

1 recording apparatus
10 processing liquid application section
11 inkjet head
12 processing liquid
15 roll coater
20 ink application section
21 inkjet head
22 ink
30 microwave drying section
33 drying section
35 drying apparatus
41 winding roller
F base material, recording medium
C Region to which processing liquid has been applied
R ink applied region
CR mixed region to which processing liquid 12 and ink 22 are applied
M microwave drying apparatus
D Conveyance direction of base material
H_{w}, H_{Y}, H_{M}, H_{C}, H_{K} inkjet head for ink application
Wₚₐᵣₜ white ink applied portion
Yₚₐᵣₜ yellow ink applied portion
Mₚₐᵣₜ magenta ink applied portion
Cₚₐᵣₜ cyan ink applied portion
Kₚₐᵣₜ black ink applied portion
H1, H2 inkjet head for processing liquid application
H3 inkjet head for metallic nanoparticle containing ink
B foam layer portion

## Claims

1. An image-forming method comprising:
processing liquid applying,
ink applying, and
drying,
wherein,
in the processing liquid applying, a processing liquid containing a material dissolved in water and having an ionic property and a solvent is applied onto a base material,
in the ink applying, an ink containing a pigment, an inorganic particle or an organic particle, and the solvent is applied, and
in at least one drying of the drying, a coating film is dried by irradiation with microwaves.

2. The image-forming method according to claim 1, wherein the processing liquid is applied by an inkjet method.

3. The image-forming method according to claim 1 or 2, wherein the ink uses two or more kinds of ink having different electrical conductivities.

4. The image-forming method according to any one of claims 1 to 3, wherein the processing liquid contains a metal salt, a cationic resin, or an organic acid.

5. The image-forming method according to any one of claims 1 to 4, wherein an electrical conductivity of the processing liquid is equal to or higher than an electrical conductivity of the ink.

6. The image-forming method according to any one of claims 1 to 5, wherein the processing liquid contains a water-soluble solvent having a boiling point of 180°C or higher.

7. The image-forming method according to any one of claims 1 to 6, wherein the processing liquid or the ink contains an ionic resin.

8. The image-forming method according to any one of claims 1 to 7, at which an electric conductivity of a mixed coating film of the processing liquid and the ink is in a range of 50 to 600 mS/m.

9. The image-forming method according to any one of claims 1 to 8, in the drying, hot air is applied to a mixed coating film of the processing liquid and the ink.

10. The image-forming method according to any one of claims 1 to 9, wherein the base material includes a portion that is deformed by heat.

11. An image-forming apparatus including processing liquid applying, ink applying, and drying, the image-forming apparatus comprising:
a unit that performs the image-forming method according to any one of claims 1 to 10.
